# EUROPEAN PATENT SPECIFICATION

(11) **EP 1 888 686 B1**
(45) Date of publication and mention of the grant of the patent: **23.01.2013**
(21) Application number: 06763330.5
(22) Date of filing: 29.05.2006
(51) Int. Cl.: C08L 51/06, C08L 23/08, C08K 5/20, C08K 5/10, C08F 255/02

(54) **SCRATCH RESISTANT POLYOLEFINS**
KRATZFESTE POLYOLEFINE
POLYOLEFINES RESISTANTES AUX RAYURES

(30) Priority: 07.06.2005 US 688063 P; 14.07.2005 US 699176 P; 13.09.2005 US 716396 P
(43) Date of publication of application: 20.02.2008
(73) Proprietor: BASF SE, 67056 Ludwigshafen (DE)
(72) Inventor: SHARMA, Ashutosh H., Wappingers Falls, NY 12590 (US); SOLERA, Peter Shelsey, Suffern, NY 10901 (US); KASPERS, Sarah Root, Scarsdale, NY 10583 (US)
(74) Representative: Herzog, Fiesser & Partner
(86) International application number: PCT/EP2006/062672
(87) International publication number: WO 2006/131455

(56) References cited:
- EP-A- 0 382 559
- EP-A- 0 430 545
- EP-A- 0 921 152
- WO-A-00/09607
- WO-A-2004/099303
- WO-A-2006/003127
- US-A- 5 973 070
- PATENT ABSTRACTS OF JAPAN vol. 2003, no. 03, 5 May 2003 (2003-05-05) & JP 2002 338778 A (NOF CORP), 27 November 2002 (2002-11-27)

## Description

The present invention is aimed at scratch resistant and light stable polyolefin compositions. The invention is also aimed at a method of imparting scratch resistance and light stability to polyolefin compositions by incorporating therein certain anti-scratch additives and certain hindered amine light stabilizers. The polyolefin compositions are for example thermoplastic olefin (TPO) molded parts. The molded parts are useful for example in automotive applications.

Long chain alcohol functionalized maleic anhydride grafted polypropylene is disclosed in Polyolefins 2003, The International Conference of Polyolefins, Feb. 24-Feb. 26, Houston, Texas, as a processing aid for polyolefins.

U.S. 6,048,942 discloses thermoplastic olefin compositions comprising mar resistance additives selected from polysiloxanes, metal stearates, saturated fatty acid amides and unsaturated fatty acid amides.

JP-A-2002338778 teaches a graft copolymer compositions comprising fatty acid amides.

U.S. 5,731,376 discloses polypropylene block copolymer with improved scratch resistance by inclusion of a polyorganosiloxane. The compositions may further include a fatty acid amide.

U.S. 5,585,420 teaches scratch resistant polyolefin compositions comprising a plate like inorganic filler. The compositions may further comprise high rubber ethylene-propylene copolymers, fatty acid amides, polyorganosiloxanes or epoxy resins.

JP-A-2002003692 discloses polypropylene resin comprising fatty acid amides.

JP-A-62072739 is aimed at molded articles for automobile parts made by compounding a specific polyolefin with a rubbery substance and a specific amount of mica of a specific particle size. The polyolefin consists of a certain polypropylene and a polyolefin modified with an unsaturated carboxylic acid (anhydride), for example maleic anhydride.

JP-A-63017947 is aimed at scratch resistant propylene polymer compositions.

JP-A-2001261902 is aimed at polypropylene resin compositions useful as molding material for preparation of interior trims.

US-A-2003/0004245 teaches blends of polyolefin and a reaction product of polyolefin and an alpha, beta unsaturated carboxylic ester, acid or anhydride.

Polyanhydride resins are described in a CPChem Specialty Chemicals data sheet of 2004.

These known methods do not satisfy the customer-requested quality of polyolefins in respect to scratch resistance and light stability.

The present invention therefore provides a polyolefin composition comprising
a) a polyolefin substrate and
   an amount effective to improve the scratch resistance and light stability of said polyolefin substrate of an additive combination of
b) a carboxylic acid reagent functionalized olefin polymer or copolymer,
c) a primary or secondary fatty acid amide and
d) a combination of
   i) a low molecular weight sterically hindered amine light stabilizer and
   ii) a high molecular weight sterically hindered amine light stabilizer.

The present invention further provides a method for providing scratch resistance and light stability to a polyolefin substrate, which method comprises incorporating into said polyolefin an effective amount of an additive combination of
b) a carboxylic acid reagent functionalized olefin polymer or copolymer,
c) a primary or secondary fatty acid amide and
d) a combination of
   i) a low molecular weight sterically hindered amine light stabilizer and
   ii) a high molecular weight sterically hindered amine light stabilizer.

A preferred embodiment of the present invention is also the use of an additive combination of
b) a carboxylic acid reagent functionalized olefin polymer or copolymer,
c) a primary or secondary fatty acid amide and
d) a combination of
   i) a low molecular weight sterically hindered amine light stabilizer and
   ii) a high molecular weight sterically hindered amine light stabilizer,
for improving the scratch resistance and light stability of a polyolefin substrate.

Examples for polyolefins are:
1. Polymers of monoolefins and diolefins, for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, for example polyethylene and polypropylene, can be prepared by different, and especially by the following, methods:
   i) radical polymerization (normally under high pressure and at elevated temperature).
   ii) catalytic polymerization using a catalyst that normally contains one or more than one metal of groups IVb, Vb, VIb or VIII of the Periodic Table. These metals usually have one or more than one ligand, typically oxides, halides, alcoholates, esters, ethers, amines, alkyls, alkenyls and/or aryls that may be either p- or s-coordinated. These metal complexes may be in the free form or fixed on substrates, typically on activated magnesium chloride, titanium(III) chloride, alumina or silicon oxide. These catalysts may be soluble or insoluble in the polymerization medium. The catalysts can be used by themselves in the polymerization or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1.), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/- alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.
4. Blends of polymers mentioned under 1.) with impact modifiers such as ethylene-propylene-diene monomer copolymers (EPDM), copolymers of ethylene with higher alpha-olefins (such as ethylene-octene copolymers), polybutadiene, polyisoprene, styrene-butadiene copolymers, hydrogenated styrene-butadiene copolymers, styrene-isoprene copolymers, hydrogenated styrene-isoprene copolymers. These blends are commonly referred to in the industry as TPO's (thermoplastic polyolefins).

Preferably, component (a) is polypropylene, polyethylene or a thermoplastic olefin.

Polyolefins of the present invention are for example polypropylene homo- and copolymers and polyethylene homo- and copolymers. For instance, polypropylene, high density polyethylene (HDPE), linear low density polyethylene (LLDPE) and polypropylene random and impact (heterophasic) copolymers. Preferred polyolefins of the present invention include polypropylene homopolymers, polypropylene impact (heterophasic) copolymers, blends thereof, and TPO's such as blends of polypropylene homopolymers and impact copolymers with EPDM or ethylene-alpha-olefin copolymers.

The polyolefins of this invention are in particular TPO's. TPO is for example about 10 to about 90 parts propylene homopolymer, copolymer or terpolymer, and about 90 to about 10 parts (parts by weight) of an elastomeric copolymer of ethylene and a C₃-C₈ alpha-olefin. TPO is disclosed for example in U.S. 6,048,942.

The term "polyolefins" broadly refers to olefin polymers or copolymers described above.

The olefin polymers or copolymers of the functionalized olefin polymers or copolymers of component b) are for example those of present component a) above.

The functionalized olefin polymers or copolymers are for example as disclosed in US-A-2003/0004245, published Jan. 2, 2003.

Preferably, component (b) is an olefin polymer or copolymer grafted with an alpha, beta-unsaturated carboxylic acid reagent.

The functionalized olefin polymers or copolymers are for example the reaction product of at least one polyolefin and at least one alpha, beta-unsaturated carboxylic acid reagent, such as an acid, ester or anhydride.

In one embodiment, the number average molecular weight of the polyolefins utilized in this component may range from about 2,000 to about 10,000. These polymers typically have a melt flow from about 8 to about 40, or from about 10 to about 35, or from about 15 to about 30 g/10 min. The amount of carboxylic acid reagent reacted with the polyolefin may range from about 0.5% to about 30% or from about 1% to about 20%, or from about 2% to about 15%, or from about 4% to about 10% by weight.

The alpha, beta unsaturated carboxylic reagent may be mono- or dicarboxylic acid reagent. The carboxylic reagents include carboxylic acids, esters and salts. The monobasic alpha, beta-unsaturated carboxylic acid reagents include acrylic, methacrylic, annamic, crotonic acids and esters, such as esters having from 1 to about 12 carbon atoms, and salts such as sodium, calcium or magnesium salts. Examples of dicarboxylic reagents include maleic acid, maleic anhydride, fumaric acid, mesaconic acid, himic anhydride, itaconic acid, citraconic acid, itaconic anhydride, citraconic anhydride, monomethyl maleate, monosodium maleate, etc. Particularly preferred alpha, beta-unsaturated carboxylic reagents are acrylic acid, methacrylic acid, acrylic esters, methacrylic esters and maleic anhydride.

Of interest is a composition wherein component (b) is an olefin polymer or copolymer grafted with an alpha, beta-unsaturated carboxylic acid reagent selected from the group consisting of acrylic acid, methacrylic acid, methyl acrylate, methyl methacrylate, 2-hydroxypropyl methacrylate, butyl acrylate and maleic anhydride.

The reaction between the carboxylic acid reagent and the olefin polymer or copolymer can be effected by means known to those skilled in the art. For example, the reaction can be conducted in solutions by a melt process in the presence of a free radical initiator. The free radical initiators usually are either peroxides or various organic azo compounds. The amount of initiator utilized generally from about 0.01% to about 5% by weight based on the combined weight of the polyolefin and the carboxylic reagent.

The reaction between the carboxylic acid reagent and the olefin polymer or copolymer is referred to as "grafting". For example, the present functionalized olefin polymers or copolymers are olefin polymers or copolymers grafted with acrylic acid, methacrylic acid, methyl acrylate, methyl methacrylate, 2-hydroxypropyl methacrylate, butyl acrylate or maleic anhydride. In the case of for example grafting with maleic anhydride, this is termed "maleated". Also of interest is a composition wherein component (b) is an olefin polymer or copolymer grafted with maleic anhydride.

Of special interest is a composition wherein component (b) is polypropylene or polyethylene grafted with maleic anhydride.

Examples of acrylated polyolefins are the POLYBOND polymers available from Uniroyal Chemical Company. A particularly useful polymer is POLYBOND 1002, which has a melt flow of 15-25 g/10 min and an acrylic acid content 5.5% to 7.0% by weight. An example of a commercially available maleic acid grafted polypropylene is Epolene E-43 wax from Eastman Chemical Products, Inc. Epolene E-43 has an acid number of 47 and an approximate number average molecular weight of 4500. Epolene C-16 and C-18 waxes are maleic acid grafted polyethylenes with approximate molecular weights of 8000 and 4000, respectively. Maleated ethylene-propylene elastomers also are useful, and such elastomers are available from Exxon Chemical Company under identification numbers 99-10, 99-14 and 99-26. These copolymers contain 77%, 64% and 43% of ethylene, respectively, and the maleated products contain 0.76%, 0.56% and 0.35% of maleic acid or anhydride, respectively.

Other examples of commercially available maleic acid anhydride grafted polyolefins include Kraton FG1901X from Shell which is often referred to as a maleated selectively hydrogenated SEBS copolymer; terpolymers available from CdF Chimie under designations such as Lotader 3200 (prepared from a mixture of 88% by weight ethylene, 9% by weight butyl acrylate and 3% maleic anhydride), Lotader 6600 (70% ethylene, 27% acrylic ester and 3% maleic anhydride) etc.; ethylene vinyl acetate copolymers grafted with maleic anhydride (EVA-MAH) are available from Quantum Chemical Corp.

Alternatively, the functionalized olefin polymers or copolymers of component b) are the reaction products of an alpha-olefin with an alpha, beta-unsaturated carboxylic acid reagent as described above. The reaction is effected by means known in the art. For example, the reaction can be conducted by a melt process in the presence of a free radical initiator. The radical initiators are for example peroxides or organic azo compounds. Again, the unsaturated carboxylic reagents are for example acrylic acid, methacrylic acid, acrylic esters methacrylic esters or maleic anhydride.

Preferably, component (b) is the reaction product of an alpha-olefin with an alpha, beta-unsaturated carboxylic acid reagent selected from the group consisting of acrylic acid, methacrylic acid, methyl acrylate, methyl methacrylate, 2-hydroxypropyl methacrylate, butyl acrylate and maleic anhydride.

For instance, the alpha-olefin is from C₃ up to about C₃₃, for example the alpha-olefin is a C₁₈-C₂₈ alpha-olefin, for example a C₂₂₋₂₆ or a C₁₈ alpha-olefin.

Of interest is a composition wherein component (b) is the reaction product of a C₁₈-C₂₆ alpha olefin and maleic anhydride.

For instance, the functionalized olefin is a maleated alpha-olefin, that is, the reaction product of an alpha-olefin and maleic anhydride. For example the maleated alpha-olefin is of the formula 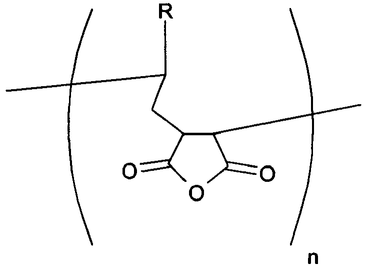 where
R is C₁₆ to C₂₄ alkyl, and
n is an integer such that the average molecular weight is between 20,000 and 50,000.

The present functionalized olefin polymers or copolymers may be further reacted with a long chain alcohol or long chain amine.

That is, the functionalized olefin polymers or copolymers may be reacted with a long chain alcohol or long chain amine to form the ester or amide or imide products.

These additives are termed long chain esters, amides or imides of the functionalized olefin polymers or copolymers. The long chain esters, amides or imides likewise fall under the present definition of carboxylic acid reagent functionalized olefin polymers or copolymers.

The carbon chain of the long chain alcohol or long chain amine is straight or branched and may be saturated or unsaturated. The amine is primary or secondary.

For example, the present functionalized olefin polymers or copolymers may be further reacted to form an ester, partial ester, or half ester product resulting from reaction with a long chain alcohol, or to form an amide, partial amide or imide product resulting from reaction with a long chain primary or secondary amine. Imides may be prepared by heating a half amide. The present functionalized olefin polymers or copolymers may be further reacted to form mixtures of esters and amides.

Half ester or partial ester derivatives may be formed by dropwise addition of alcohol to a stirred, acid catalyzed solution of the functionalized olefin polymer or copolymer in an appropriate solvent under conditions such that water is not removed from the reaction mixture. Appropriate solvent is for example methyl isobutyl ketone. Suitable acid catalysts include sulfuric acid, methanesulfonic acid, and p-toluenesulfonic acid. Diesters are prepared using excess alcohol and removing the water to drive the reaction towards full esterification.

For instance, the present long chain esters are esters or half esters of maleated alpha-olefin of the formula 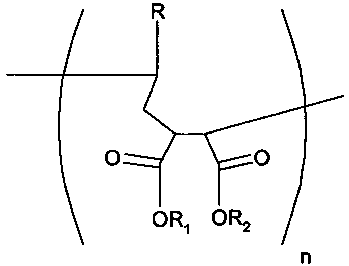 where
R is C₁₆ to C₂₄ alkyl,
R₁ and R₂ are independently hydrogen, C₁-C₂₂ alkyl or C₂-C₂₂ alkenyl, where at least one of R₁ and R₂ are C₁₂-C₂₂ alkyl or alkenyl, and
n is an integer such that the average molecular weight is between 20,000 and 50,000.

For instance, the present long chain amides are amides of maleated alpha-olefin of the formula 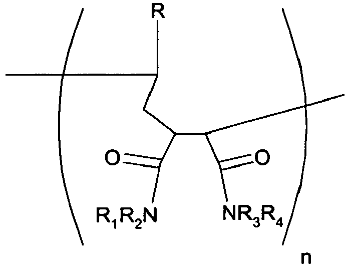 where
R is C₁₆ to C₂₄ alkyl,
R₁, R₂, R₃ and R₄ are independently hydrogen, C₁-C₂₂ alkyl or C₂-C₂₂ alkenyl, where at least one of R₁, R₂, R₃ or R₄ are C₁₂-C₂₂ alkyl or alkenyl, and
n is an integer such that the average molecular weight is between 20,000 and 50,000.

For instance, the present long chain imides are imides of maleated alpha-olefins of the formula 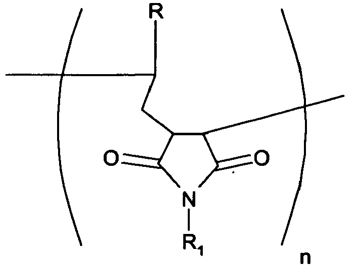 where
R is C₁₆ to C₂₄ alkyl,
R₁ is C₁₂-C₂₂ alkyl or alkenyl, and
n is an integer such that the average molecular weight is between 20,000 and 50,000.

For example R is C₁₆ alkyl or C₂₀-C₂₄alkyl.

For instance, the present long chain esters of the functionalized olefin polymer or copolymer are half esters or esters with tallow fatty alcohol, ricinoleyl alcohol [CAS# 540-11-4] or oleyl alcohol.

For example, the present long chain esters of the functionalized polyolefins are the half ester or ester reaction products of maleated olefin polymers or copolymers with the long chain alcohols.

For instance, the present long chain esters are the half ester or ester reaction products of maleated alpha-olefins with the long chain alcohols.

For instance, the present long chain amides are amide reaction products of maleated olefin polymers or copolymers or of maleated alpha-olefins with oleamide, erucamide, stearamide, behenamide, oleyl palmitamide, stearyl erucamide, ethylene-bis-stearamide or ethylene-bis-oleamide, or are the corresponding imides with oleamide, erucamide, stearamide or behenamide. That is, the amide or imide reaction products of maleated olefin polymers or copolymers or of maleated alpha-olefins with long chain amines.

For example, the present functionalized olefin polymer or copolymer is a long chain ester, long chain half ester, long chain amide, long chain partial amide or a long chain imide, which ester, half ester, amide, partial amide or imide is formed by the reaction of a long chain alcohol or long chain primary or secondary amine of the formulae

R₁OH or R₁R₂NH

where
R₁ is C₁₂-C₂₂alkyl or C₁₂-C₂₂alkenyl, and
R₂ is hydrogen, C₁-C₂₂alkyl or C₂-C₂₂alkenyl,
with an olefin polymer or copolymer grafted with an alpha, beta-unsaturated carboxylic acid reagent or with a reaction product of an alpha-olefin with an alpha, beta-unsaturated carboxylic acid reagent.

Of interest is a composition wherein component (b) is the half ester or ester of maleated polypropylene, maleated polyethylene or maleated C₁₈-C₂₆ alpha-olefin with tallow fatty alcohol, ricinoleyl alcohol or oleyl alcohol.

The primary or secondary fatty acid amides are for example where the fatty group of the fatty acids are C₁₁ to C₂₁ alkyl or alkenyl.

The primary or secondary fatty acid amide is for example at least one compound selected from the group consisting of oleamide, erucamide, stearamide, behenamide, oleyl palmitamide, stearyl erucamide, ethylene-bis-stearamide and ethylene-bis-oleamide.

In particular, the present fatty acid amides are secondary fatty acid amides, for example stearyl erucamide or oleyl palmitamide.

Suitable fatty acid amides are for example disclosed in U.S. 6,228,915.

Alkyl is straight or branched chain and is for example methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethylhexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, icosyl or docosyl.

Alkenyl is ethylenically unsaturated alkyl, for example allyl.

The weight:weight ratio of component (b) to component (c) is for example between 20:1 and 1:20, between 10:1 and 1:10, between 1:1 and 20:1, for example between about 1:1 and 15:1, between 1:1 and 10:1, between 1:1 and 7:1, or between 1:1 and 5:1. For instance, the weight:weight ration of the functionalized maleated alpha-olefin to the primary or secondary fatty acid amide is 1.5:1, 2:1, 3:1 or 4:1.

The total amount of components (b) and (c) to be incorporated into the polyolefin substrate is for example between 1% and 15% by weight, based on the weight of component (a). For example, the total amount of components (b) and (c) is from 1% to 10%, from 3% to 7%, or from 3% to 5% by weight, based on the weight of component (a). Preferably, the total amount of components (b) and (c) is from 1% to 3%, from 1% to 5%, or from 1% to 7% by weight, based on the weight of component (a).

The present low molecular weight and high molecular weight hindered amine stabilizers (HALS) of component d) are defined similarly; that is they have the same structural definitions but are distinguished by their molecular weight. The low molecular weight stabilizers have a molecular weight of from 200 to 1000 g/mol. The high molecular weight stabilizers have a molecular weight of from 1200 to 10,000 g/mol.

The low molecular weight hindered amines are generally discrete monomeric compounds, or mixtures of such compounds. The high molecular weight hindered amines are generally oligomeric or polymeric compounds.

The present sterically hindered amine stabilizers contain at least one moiety of formula 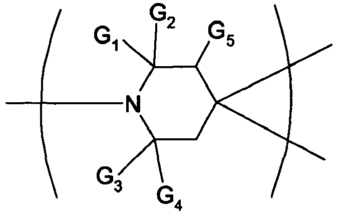 where G₁, G₂, G₃, G₄ and G₅ are independently alkyl of 1 to 8 carbon atoms or G₁ and G₂ or G₃ and G₄ together are pentamethylene.

The hindered amines are disclosed for example in U.S. Pat. Nos. 5,004,770; 5,204,473; 5,096,950; 5,300,544; 5,112,890; 5,124,378; 5,145,893; 5,216,156; 5,844,026; 5,980,783; 6,046,304; 6,117,995; 6,271,377; 6,297,299; 6,392,041; 6,376,584 and 6,472,456.

U.S. Pat. Nos. 6,271,377; 6,392,041 and 6,376,584, cited above disclose hindered hydroxy-alkoxyamine stabilizers.

Suitable low molecular weight hindered amines include for example:
1) 1-cyclohexyloxy-2,2,6,6-tetramethyl-4-octadecylaminopiperidine,
2) bis(2,2,6,6-tetramethylpiperidin-4-yl) sebacate,
3) bis(1-acetoxy-2,2,6,6-tetramethylpiperidin-4-yl) sebacate,
4) bis(1,2,2,6,6-pentamethyl-4-yl) sebacate,
5) bis(1-cyclohexyloxy-2,2,6,6-tetramethylpiperidin-4-yl) sebacate,
6) bis(1-octyloxy-2,2,6,6-tetramethylpiperidin-4-yl) sebacate;
7) bis(1-acyl-2,2,6,6-tetramethylpiperidin-4-yl) sebacate,
8) bis(1,2,2,6,6-pentamethyl-4-piperidyl) n-butyl-3,5-di-tert-butyl-4-hydroxybenzylmalonate
9) 2,4-bis[(1-cyclohexyloxy-2,2,6,6-tetramethylpiperidin-4-yl)butylamino]-6-(2-hydroxyethylamino-s-triazine,
10) bis(1-cyclohexyloxy-2,2,6,6-tetramethylpiperidin-4-yl) adipate,
11) 2,4-bis[(1-cyclohexyloxy-2,2,6,6-piperidin-4-yl)butylamino]-6-chloro-s-triazine,
12) 1-(2-hydroxy-2-methylpropoxy)-4-hydroxy-2,2,6,6-tetramethylpiperidine,
13) 1-(2-hydroxy-2-methylpropoxy)-4-oxo-2,2,6,6-tetramethylpiperidine,
14) 1-(2-hydroxy-2-methylpropoxy)-4-octadecanoyloxy-2,2,6,6-tetramethylpiperidine,
15) bis(1-(2-hydroxy-2-methylpropoxy)-2,2,6,6-tetramethylpiperidin-4-yl) sebacate,
16) bis(1-(2-hydroxy-2-methylpropoxy)-2,2,6,6-tetramethylpiperidin-4-yl) adipate,
17) 2,4-bis{N-[1-(2-hydroxy-2-methylpropoxy)-2,2,6,6-tetramethylpiperidin-4-yl]-N-butylamino}-6-(2-hydroxyethylamino)-s-triazine,
18) 4-benzoyl-2,2,6,6-tetramethylpiperidine,
19) di-(1,2,2,6,6-pentamethylpiperidin-4-yl) p-methoxybenzylidenemalonate,
20) 4-stearyloxy-2,2,6,6-tetramethylpiperidine,
21) bis(1-octyloxy-2,2,6,6-tetramethylpiperidyl) succinate,
22) 1,2,2,6,6-pentamethyl-4-aminopiperidine,
23) 2-undecyl-7,7,9,9-tetramethyl-1-oxa-3,8-diaza-4-oxo-spiro[4,5]decane,
24) tris(2,2,6,6-tetramethyl-4-piperidyl) nitrilotriacetate,
25) tris(2-hydroxy-3-(amino-(2,2,6,6-tetramethylpiperidin-4-yl)propyl) nitrilotriacetate,
26) tetrakis(2,2,6,6-tetramethyl-4-piperidyl)-1,2,3,4-butane-tetracarboxylate,
27) tetrakis(1,2,2,6,6-pentamethyl-4-piperidyl)-1,2,3,4-butane-tetracarboxylate,
28) 1,1'-(1,2-ethanediyl)-bis(3,3,5,5-tetramethylpiperazinone),
29) 3-n-octyl-7,7,9,9-tetramethyl-1,3,8-triazaspiro[4.5]decan-2,4-dione,
30) 8-acetyl-3-dodecyl-7,7,9,9-tetramethyl-1,3,8-triazaspiro[4.5]decane-2,4-dione,
31) 3-dodecyl-1-(2,2,6,6-tetramethyl-4-piperidyl)pyrrolidin-2,5-dione,
32) 3-dodecyl-1-(1,2,2,6,6-pentamethyl-4-piperidyl)pyrrolidine-2,5-dione and
33)N,N'-bis-formyl-N,N'-bis(2,2,6,6-tetramethyl-4-piperidyl)hexamethylenediamine
and the high molecular weight hindered amines are selected from the group consisting of
34) the reaction product of 2,4-bis[(1-cyclohexyloxy-2,2,6,6-piperidin-4-yl)butylamino]-6-chloro-s-triazine with N,N'-bis(3-aminopropyl)ethylenediamine),
35) the condensate of 1-(2-hydroxyethyl)-2,2,6,6-tetramethyl-4-hydroxypiperidine and succinic acid,
36) linear or cyclic condensates of N,N'-bis(2,2,6,6-tetramethyl-4-piperidyl)-hexamethylenediamine and 4-tert-octylamino-2,6-dichloro-1,3,5-triazine,
37) linear or cyclic condensates of N,N'-bis(2,2,6,6-tetramethyl-4-piperidyl)-hexamethylenediamine and 4-cyclohexylamino-2,6-dichloro-1,3,5-triazine,
38) linear or cyclic condensates of N,N'-bis-(2,2,6,6-tetramethyl-4-piperidyl)-hexamethylenediamine and 4-morpholino-2,6-dichloro-1,3,5-triazine,
39) linear or cyclic condensates of N,N'-bis-(1,2,2,6,6-pentamethyl-4-piperidyl)-hexamethylenediamine and 4-morpholino-2,6-dichloro-1,3,5-triazine,
40) the condensate of 2-chloro-4,6-bis(4-n-butylamino-2,2,6,6-tetramethylpiperidyl)-1,3,5-triazine and 1,2-bis(3-aminopropylamino)ethane,
41) the condensate of 2-chloro-4,6-di-(4-n-butylamino-1,2,2,6,6-pentamethylpiperidyl)-1,3,5-triazine and 1,2-bis-(3-aminopropylamino)ethane,
42) a reaction product of 7,7,9,9-tetramethyl-2-cycloundecyl-1-oxa-3,8-diaza-4-oxo-spiro [4,5]decane and epichlorohydrin,
43) poly[methyl,(3-oxy-(2,2,6,6-tetramethylpiperidin-4-yl)propyl)] siloxane, CAS#182635-99-0,
44) reaction product of maleic acid anhydride-C₁₈-C₂₂-α-olefin-copolymer with 2,2,6,6-tetramethyl-4-aminopiperidine,
45) the oligomeric compound which is the condensation product of 4,4'-hexamethylene-bis(amino-2,2,6,6-tetramethylpiperidine) and 2,4-dichloro-6-[(2,2,6,6-tetra-methylpiperidin-4-yl)butylamino]-s-triazine end-capped with 2-chloro-4,6-bis(dibutylamino)-s-triazine,
46) the oligomeric compound which is the condensation product of 4,4'-hexamethylene-bis(amino-1,2,2,6,6-pentamethylpiperidine) and 2,4-dichloro-6-[(1,2,2,6,6-pentamethylpiperidin-4-yl)butylamino]-s-triazine end-capped with 2-chloro-4,6-bis(dibutylamino)-s-triazine,
47) the oligomeric compound which is the condensation product of 4,4'-hexamethylene-bis(amino-1-propoxy-2,2,6,6-tetramethylpiperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine,
48) the oligomeric compound which is the condensation product of 4,4'-hexamethylene-bis(amino-1-acyloxy-2,2,6,6-tetramethylpiperidine) and 2,4-dichloro-6-[(1-acyloxy-2,2,6,6-tetramethylpiperidin-4-yl)butylamino]-s-triazine end-capped with 2-chloro-4,6-bis(dibutylamino)-s-triazine and
49) product obtained by reacting a product, obtained by reacting 1,2-bis(3-amino-propylamino)ethane with cyanuric chloride, with (2,2,6,6-tetramethylpiperidin-4-yl)butylamine.

Also included are the sterically hindered N-H, N-methyl, N-methoxy, N-propoxy, N-octyloxy, N-cyclohexyloxy, N-acyloxy and N-(2-hydroxy-2-methylpropoxy) analogues of any of the above mentioned compounds. For example, replacing an N-H hindered amine with an N-methyl hindered amine would be employing the N-methyl analogue in place of the N-H.

For illustrative purposes, some of the structures for the above-named compounds are shown below: 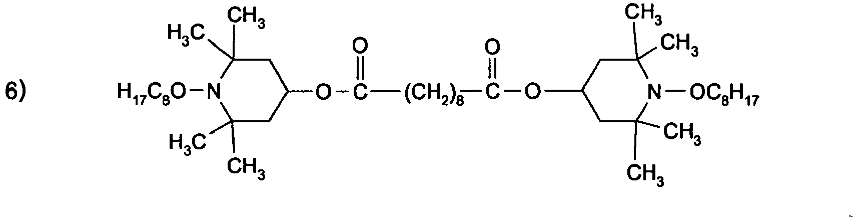 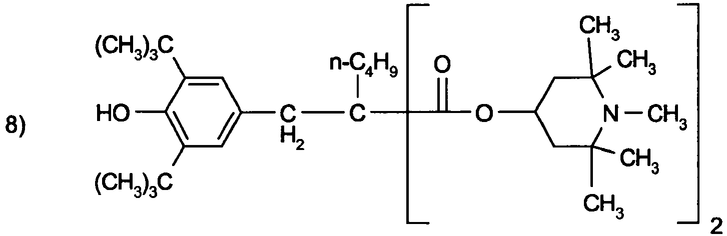 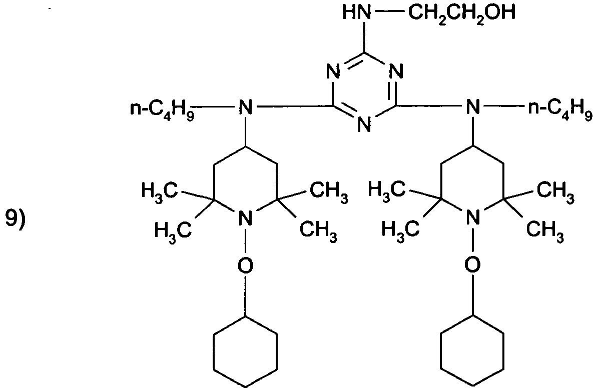 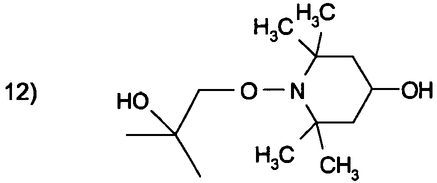 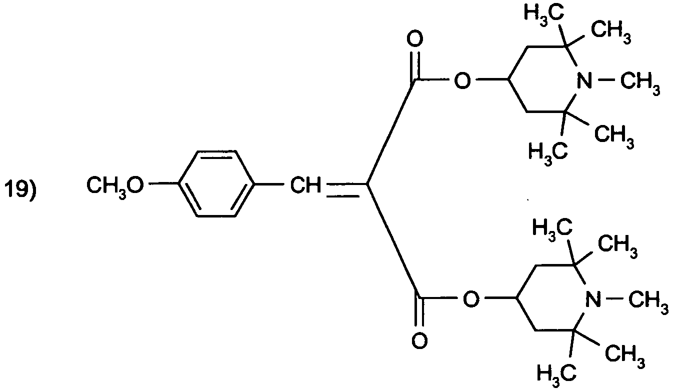 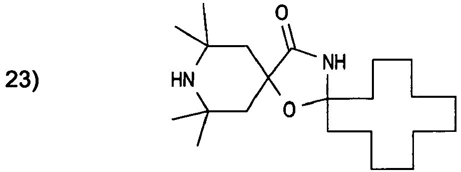 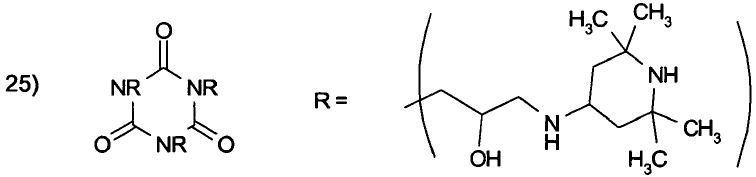 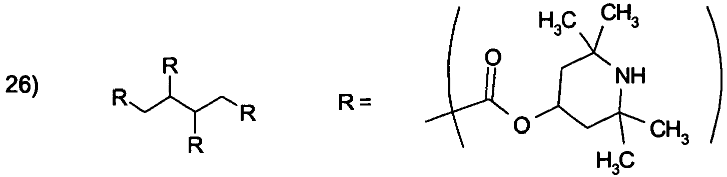 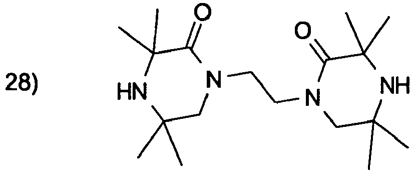 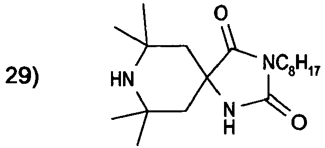 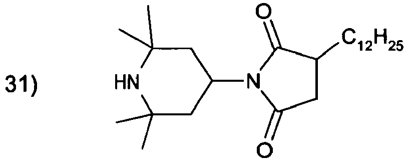 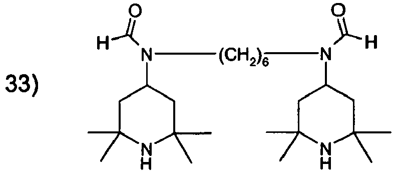 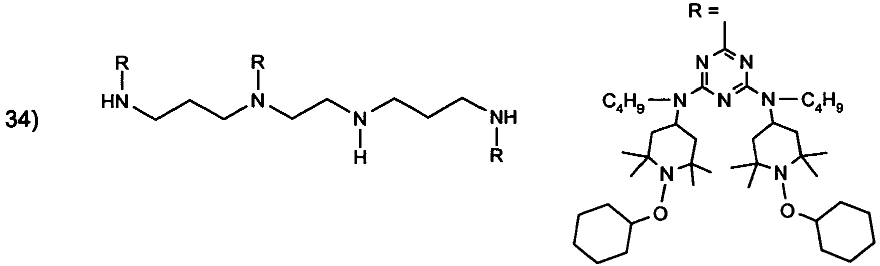 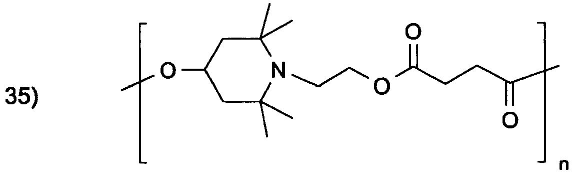 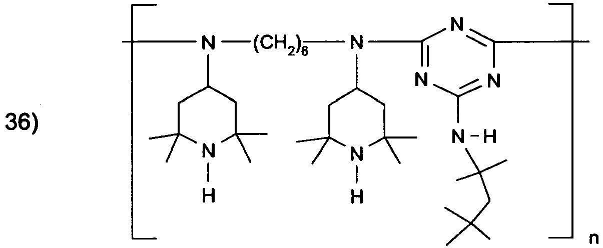 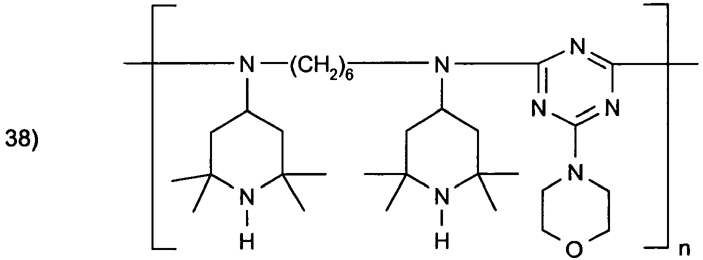 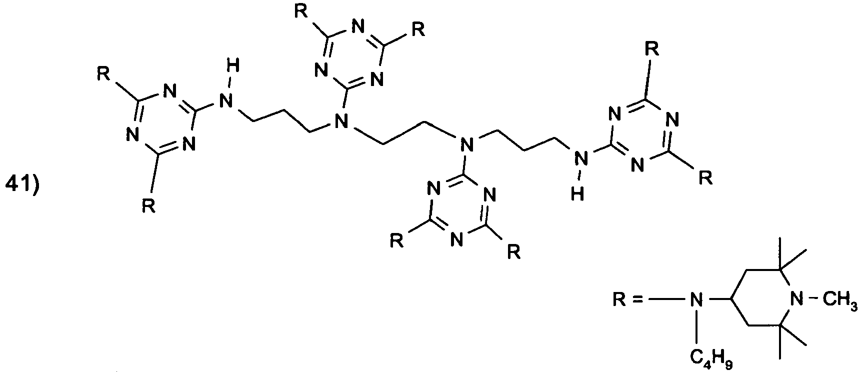 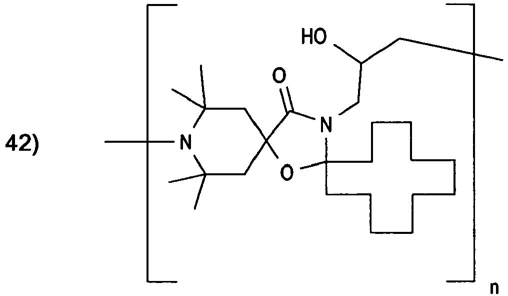 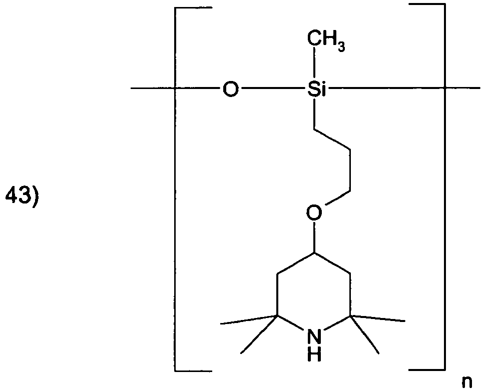 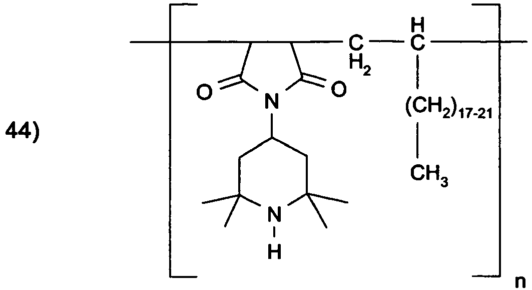 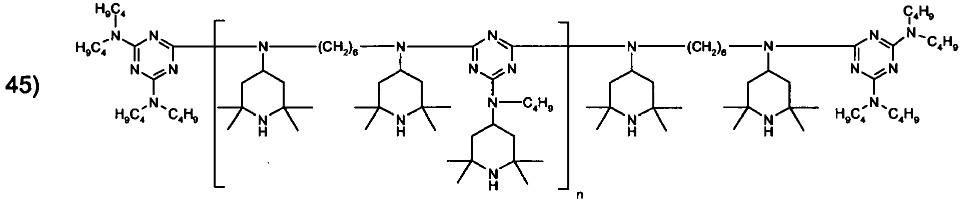 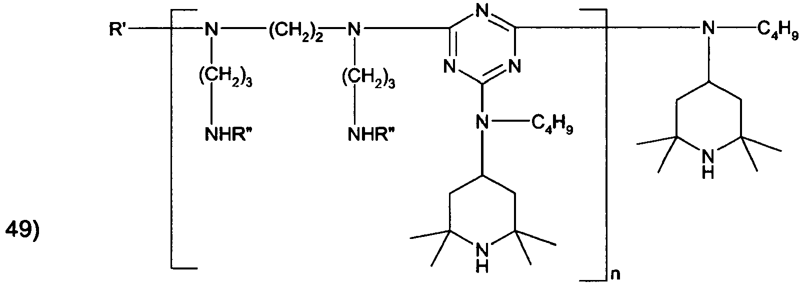 where R' = R" or H
and where R" = =

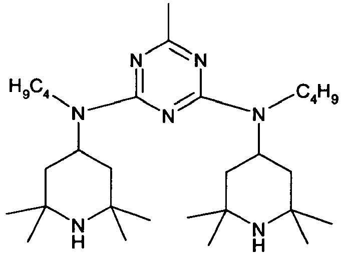

In the high molecular weight hindered amine compounds, n is an integer such that the molecular weight is greater than about 1200.

Of interest are compositions wherein the low molecular weight hindered amines are selected from the group consisting of
2) bis(2,2,6,6-tetramethylpiperidin-4-yl) sebacate,
6) bis(1-octyloxy-2,2,6,6-tetramethylpiperidyl) sebacate,
14) 1-(2-hydroxy-2-methylpropoxy)-4-octadecanoyloxy-2,2,6,6-tetramethylpiperidine, and
15) bis(1-(2-hydroxy-2-methylpropoxy)-2,2,6,6-tetramethylpiperidin-4-yl) sebacate, and the high molecular weight hindered amines are selected from the group consisting of
34) the reaction product of 2,4-bis[(1-cyclohexyloxy-2,2,6,6-piperidin-4-yl)butylamino]-6-chloro-s-triazine with N,N'-bis(3-aminopropyl)ethylenediamine),
35) the condensate of 1-(2-hydroxyethyl)-2,2,6,6-tetramethyl-4-hydroxypiperidine and succinic acid,
36) linear or cyclic condensates of N,N'-bis(2,2,6,6-tetramethyl-4-piperidyl)-hexamethylenediamine and 4-tert-octylamino-2,6-dichloro-1,3,5-triazine,
38) linear or cyclic condensates of N,N'-bis-(2,2,6,6-tetramethyl-4-piperidyl)-hexamethylenediamine and 4-morpholino-2,6-dichloro-1,3,5-triazine,
39) linear or cyclic condensates of N,N'-bis-(1,2,2,6,6-pentamethyl-4-piperidyl)-hexamethylenediamine and 4-morpholino-2,6-dichloro-1,3,5-triazine,
40) the condensate of 2-chloro-4,6-bis(4-n-butylamino-2,2,6,6-tetramethylpiperidyl)-1,3,5-triazine and 1,2-bis(3-aminopropylamino)ethane, and
45) the oligomeric compound which is the condensation product of 4,4'-hexamethylene-bis(amino-2,2,6,6-tetramethylpiperidine) and 2,4-dichloro-6-[(2,2,6,6-tetra-methylpiperidin-4-yl)butylamino]-s-triazine end-capped with 2-chloro-4,6-bis(di-butylamino)-s-triazine.

The hindered amine compounds of component (d), in total, are advantageously contained in the composition of the invention in an amount of from 0.05 to 20% by weight based on the weight of component (a); for example from 0.1 to 10% by weight; for example from 0.2 to 8% by weight; for instance from 0.5 to 3% by weight based on the weight of component (a).

The low molecular weight hindered amines/high molecular weight hindered amines are employed in a weight/weight ratio of from 1:100 to 100:1, for example from 1:20 to 20:1, for instance from 1:10 to 10:1, or from 1:5 to 5:1, or from 4:1 to 1:4, or from 3:1 to 1:3, or from 2:1 to 1:2.

The additives of the invention may be added to the polyolefin substrate individually or mixed with one another. If desired, the individual components can be mixed with one another before incorporation into the polyolefin for example by dry blending, compaction or in the melt.

The incorporation of the additives of the invention is carried out by known methods such as dry blending in the form of a powder, or wet mixing in the form of solutions, dispersions or suspensions for example in an inert solvent, water or oil. The additives of the invention may be incorporated, for example, before or after molding or also by applying the dissolved or dispersed additive or additive mixture to the polyolefin material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen.

The addition of the additives to the polyolefin substrate can be carried out in all customary mixing machines in which the polyolefin is melted and mixed with the additives. Suitable machines are known to those skilled in the art. They are predominantly mixers, kneaders and extruders.

Processing includes extrusion, co-kneading, pultrusion, compression molding, sheet extrusion, thermoforming, injection molding, reactive injection molding or rotational molding. The process is preferably carried out in an extruder by introducing the additives during processing.

Particularly preferred processing machines are single-screw extruders, contrarotating and corotating twin-screw extruders, rotomolding devices, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 *(*Vol. 2 Extrusionsanlagen 1986, ISBN 3-446-14329-7*)*.

For example, the screw length is 1-60 screw diameters, preferably 35-48 screw diameters. The rotational speed of the screw is preferably 10-600 rotations per minute (rpm), very particularly preferably 25-300 rpm.

The maximum throughput is dependent on the screw diameter, the rotational speed and the driving force. The process of the present invention can also be carried out at a level lower than maximum throughput by varying the parameters mentioned or employing weighing machines delivering dosage amounts.

If a plurality of components are added, these can be premixed or added individually.

The additives of the invention can also be sprayed onto the polyolefin material. They are able to dilute other additives (for example optional conventional additives) or their melts so that they can be sprayed also together with these additives onto the material. Addition by spraying during the deactivation of the polymerization catalysts is particularly advantageous; in this case, the steam evolved may be used for deactivation of the catalyst. In the case of spherically polymerized polyolefins it may, for example, be advantageous to apply the additives of the invention, optionally together with other additives, by spraying.

The additives of the invention and optional further additives can also be added to the polyolefin in the form of a masterbatch ("concentrate") which contains the components in a concentration of, for example, about 1% to about 40% and preferably about 2% to about 20% by weight incorporated in a polymer. The polymer must not necessarily be identical to the polyolefin where the additives are added finally. In such operations, the polymer can be used in the form of powder, granules, solutions, suspensions or in the form of latices. Incorporation can take place prior to or during the shaping operation, or by applying the dissolved or dispersed compound to the polyolefin, with or without subsequent evaporation of the solvent. A further possibility for incorporating the additives of the invention into polyolefins is to add them before, during or directly after the polymerization of the corresponding monomers or prior to crosslinking. In this context the additives of the invention can be added as it is or else in encapsulated form (for example in waxes, oils or polymers).

The polyolefins containing the additives of the invention described herein can be used for the production of moldings, rotomolded articles, injection molded articles, blow molded articles, profiles, and the like.

The polyolefins of the present invention may optionally also contain from about 0.01 to 5%, preferably from 0.025 to 2%, and especially from 0.1 to 1% by weight of various conventional additives, such as the materials listed below, or mixtures thereof.

### 1. Antioxidants

1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1-methylundec-1-yl)phenol, 2,4-dimethyl-6-(1-methylheptadec-1-yl)phenol, 2,4-dimethyl-6-(1-methyltridec-1-yl)phenol and mixtures thereof.
1.2. Alkylthiomethylphenols, for example 2,4-dioctylthiomethyl-6-tert-butylphenol, 2,4-dioctylthiomethyl-6-methylphenol, 2,4-dioctylthiomethyl-6-ethylphenol, 2,6-di-dodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.
1.4. Tocopherols, for example α-tocopherol, β-tocopherol, γ-tocopherol, δ-tocopherol and mixtures thereof (Vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methyl phenol), 4,4'-thiobis-(3,6-di-sec-amylphenol), 4,4'-bis(2,6-dimethyl-4-hydroxyphenyl)disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3-tert-butyl-4-hydroxyphenyl)butyrate], bis(3-tert-butyl-4-hydroxy-5-methyl-phenyl)dicyclopentadiene, bis[2-(3'tert-butyl-2-hydroxy-5-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.
1.7. Benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, 1,3,5-tri-(3,5-di-tert-butyl-4-hydroxybenzyl)-2,4,6-trimethylbenzene, di-(3,5-di-tert-butyl-4-hydroxybenzyl) sulfide, 3,5-di-tert-butyl-4-hydroxybenzyl-mercapto-acetic acid isooctyl ester, bis-(4-tert-butyl-3-hydroxy-2,6-dimethylbenzyl)dithiol terephthalate, 1,3,5-tris-(3,5-di-tert-butyl-4-hydroxybenzyl) isocyanurate, 1,3,5-tris-(4-tert-butyl-3-hydroxy-2,6-dimethylbenzyl) isocyanurate, 3,5-di-tert-butyl-4-hydroxybenzyl-phosphoric acid dioctadecyl ester and 3,5-di-tert-butyl-4-hydroxybenzyl-phosphoric acid monoethyl ester, calcium-salt.
1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, di-dodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
1.12. Acylaminophenols, for example 4-hydroxy-lauric acid anilide, 4-hydroxy-stearic acid anilide, 2,4-bis-octylmercapto-6-(3,5-tert-butyl-4-hydroxyanilino)-s-triazine and octyl-N-(3,5-di-tert-butyl-4-hydroxyphenyl)-carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.15. Esters of β-(3,5-dicyclohexyl-4-hydroxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)-hydrazide, N,N'-bis[2-(3-[3,5-di-tert-butyl-4-hydroxyphenyl]propionyloxy)ethyl]oxamide (Naugard^{®}XL-1 supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of mono- and dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- and dialkylated tert-butyldiphenylamines, 2,3-dihydro-3,3-dimethyl-4H-1,4-benzothiazine, phenothiazine, a mixture of mono- and dialkylated tert-butyl/tert-octylphenothiazines, a mixture of mono- and dialkylated tert-octyl-phenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.

### 2. UV absorbers and light stabilizers

2.1. 2-(2-Hydroxyphenyl)-2H-benzotriazoles, for example known commercial hydroxyphenyl-2H-benzotriazoles and benzotriazoles as disclosed in, United States Patent Nos. 3,004,896; 3,055,896; 3,072,585; 3,074,910; 3,189,615; 3,218,332; 3,230,194; 4,127,586; 4,226,763; 4,275,004; 4,278,589; 4,315,848; 4,347,180; 4,383,863; 4,675,352; 4,681,905, 4,853,471; 5,268,450; 5,278,314; 5,280,124; 5,319,091; 5,410,071; 5,436,349; 5,516,914; 5,554,760; 5,563,242; 5,574,166; 5,607,987, 5,977,219 and 6,166,218 such as 2-(2-hydroxy-5-methylphenyl)2H-benzotriazole, 2-(3,5-di-t-butyl-2-hydroxyphenyl)-2H-benzotriazole, 2-(2-hydroxy-5-t-butylphenyl)-2H-benzotriazole, 2-(2-hydroxy-5-t-octylphenyl)-2H-benzotriazole, 5-chloro-2-(3,5-di-t-butyl-2-hydroxyphenyl)-2H-benzotriazole, 5-chloro-2-(3-t-butyl-2-hydroxy-5-methylphenyl)-2H-benzotriazole, 2-(3-sec-butyl-5-t-butyl-2-hydroxyphenyl)-2H-benzotriazole, 2-(2-hydroxy-4-octyloxyphenyl)-2H-benzotriazole, 2-(3,5-di-t-amyl-2-hydroxyphenyl)-2H-benzotriazole, 2-(3,5-bis-α-cumyl-2-hydroxyphenyl)-2H-benzotriazole, 2-(3-t-butyl-2-hydroxy-5-(2-(ω-hydroxy-octa-(ethyleneoxy)carbonyl-ethyl)-phenyl)-2H-benzotriazole, 2-(3-dodecyl-2-hydroxy-5-methylphenyl)-2H-benzotriazole, 2-(3-t-butyl-2-hydroxy-5-(2-octyloxycarbonyl)ethylphenyl)-2H-benzotriazole, dodecylated 2-(2-hydroxy-5-methylphenyl)-2H-benzotriazole, 2-(3-t-butyl-2-hydroxy-5-(2-octyloxycarbonylethyl)phenyl)-5-chloro-2H-benzotriazole, 2-(3-tert-butyl-5-(2-(2-ethylhexyloxy)-carbonylethyl)-2-hydroxyphenyl)-5-chloro-2H-benzotriazole, 2-(3-t-butyl-2-hydroxy-5-(2-methoxycarbonylethyl)phenyl)-5-chloro-2H-benzotriazole, 2-(3-t-butyl-2-hydroxy-5-(2-methoxycarbonylethyl)phenyl)-2H-benzotriazole, 2-(3-t-butyl-5-(2-(2-ethylhexyloxy)carbonylethyl)-2-hydroxyphenyl)-2H-benzotriazole, 2-(3-t-butyl-2-hydroxy-5-(2-isooctyloxycarbonylethyl)phenyl-2H-benzotriazole, 2,2'-methylene-bis(4-t-octyl-(6-2H-benzotriazol-2-yl)phenol), 2-(2-hydroxy-3-α-cumyl-5-t-octylphenyl)-2H-benzotriazole, 2-(2-hydroxy-3-t-octyl-5-α-cumylphenyl)-2H-benzotriazole, 5-fluoro-2-(2-hydroxy-3,5-di-α-cumylphenyl)-2H-benzotriazole, 5-chloro-2-(2-hydroxy-3,5-di-α-cumylphenyl)-2H-benzotriazole, 5-chloro-2-(2-hydroxy-3-α-cumyl-5-t-octylphenyl)-2H-benzotriazole, 2-(3-t-butyl-2-hydroxy-5-(2-isooctyloxycarbonylethyl)phenyl)-5-chloro-2H-benzotriazole, 5-trifluoromethyl-2-(2-hydroxy-3-α-cumyl-5-t-octylphenyl)-2H-benzotriazole, 5-trifluoromethyl-2-(2-hydroxy-5-t-octylphenyl)-2H-benzotriazole, 5-trifluoromethyl-2-(2-hydroxy-3,5-di-t-octylphenyl)-2H-benzotriazole, methyl 3-(5-trifluoromethyl-2H-benzotriazol-2-yl)-5-t-butyl-4-hydroxyhydrocinnamate, 5-butylsulfonyl-2-(2-hydroxy-3-α-cumyl-5-t-octylphenyl)-2H-benzotriazole, 5-trifluoromethyl-2-(2-hydroxy-3-α-cumyl-5-t-butylphenyl)-2H-benzotriazole, 5-trifluoromethyl-2-(2-hydroxy-3,5-di-t-butylphenyl)-2H-benzotriazole, 5-trifluoromethyl-2-(2-hydroxy-3,5-di-α-cumylphenyl)-2H-benzotriazole, 5-butylsulfonyl-2-(2-hydroxy-3,5-di-t-butylphenyl)-2H-benzotriazole and 5-phenylsulfonyl-2-(2-hydroxy-3,5-di-t-butylphenyl)-2H-benzotriazole.
2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
2.3. Esters of substituted and unsubstituted benzoic acids, as for example 4-tert-butylphenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4. Acrylates and malonates, for example, α-cyano-β,β-diphenylacrylic acid ethyl ester or isooctyl ester, α-carbomethoxy-cinnamic acid methyl ester, α-cyano-β-methyl-p-methoxy-cinnamic acid methyl ester or butyl ester, α-carbomethoxy-p-methoxy-cinnamic acid methyl ester, N-(β-carbomethoxy-β-cyanovinyl)-2-methyl-indoline, Sanduvor^{®} PR25, dimethyl p-methoxybenzylidenemalonate (CAS# 7443-25-6), and Sanduvor^{®} PR31, di-(1,2,2,6,6-pentamethylpiperidin-4-yl) p-methoxybenzylidenemalonate (CAS #147783-69-5).
2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
2.6. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
2.7. Tris-aryl-o-hydroxyphenyl-s-triazines for example known commercial tris-aryl-o-hydroxyphenyl-s-triazines and triazines as disclosed in, United States Patent Nos. 3,843,371; 4,619,956; 4,740,542; 5,096,489; 5,106,891; 5,298,067; 5,300,414; 5,354,794; 5,461,151; 5,476,937; 5,489,503; 5,543,518; 5,556,973; 5,597,854; 5,681,955; 5,726,309; 5,736,597; 5,942,626; 5,959,008; 5,998,116; 6,013,704; 6,060,543; 6,242,598 and 6,255,483, for example 4,6-bis-(2,4-dimethylphenyl)-2-(2-hydroxy-4-octyloxyphenyl)-s-triazine, Cyasorb^{®} 1164, Cytec Corp, 4,6-bis-(2,4-dimethylphenyl)-2-(2,4-dihydroxyphenyl)-s-triazine, 2,4-bis(2,4-dihydroxyphenyl)-6-(4-chlorophenyl)-s-triazine, 2,4-bis[2-hydroxy-4-(2-hydroxyethoxy)phenyl]-6-(4-chlorophenyl)-s-triazine, 2,4-bis[2-hydroxy-4-(2-hydroxy-4-(2-hydroxyethoxy)phenyl]-6-(2,4-dimethylphenyl)-s-triazine, 2,4-bis[2-hydroxy-4-(2-hydroxyethoxy)phenyl]-6-(4-bromophenyl)-s-triazine, 2,4-bis[2-hydroxy-4-(2-acetoxyethoxy)phenyl]-6-(4-chlorophenyl)-s-triazine, 2,4-bis(2,4-dihydroxyphenyl)-6-(2,4-dimethylphenyl)-s-triazine, 2,4-bis(4-biphenylyl)-6-(2-hydroxy-4-octyloxycarbonylethylideneoxyphenyl)-s-triazine, 2-phenyl-4-[2-hydroxy-4-(3-sec-butyloxy-2-hydroxypropyloxy)phenyl]-6-[2-hydroxy-4-(3-sec-amyloxy-2-hydroxypropyloxy)phenyl]-s-triazine, 2,4-bis(2,4-dimethylphenyl)-6-[2-hydroxy-4-(3-benzyloxy-2-hydroxypropyloxy)phenyl]-s-triazine, 2,4-bis(2-hydroxy-4-n-butyloxyphenyl)-6-(2,4-di-n-butyloxyphenyl)-s-triazine, 2,4-bis(2,4-dimethylphenyl)-6-[2-hydroxy-4-(3-nonyloxy*-2-hydroxypropyloxy)-5-α-cumylphenyl]-s-triazine (* denotes a mixture of octyloxy, nonyloxy and decyloxy groups), methylenebis-(2,4-bis(2,4-dimethylphenyl)-6-[2-hydroxy-4-(3-butyloxy-2-hydroxypropoxy)phenyl]-s-triazine), methylene bridged dimer mixture bridged in the 3:5', 5:5' and 3:3' positions in a 5:4:1 ratio, 2,4,6-tris(2-hydroxy-4-isooctyloxycarbonylisopropylideneoxyphenyl)-s-triazine, 2,4-bis(2,4-dimethylphenyl)-6-(2-hydroxy-4-hexyloxy-5-α-cumylphenyl)-s-triazine, 2-(2,4,6-trimethylphenyl)-4,6-bis[2-hydroxy-4-(3-butyloxy-2-hydroxypropyloxy)phenyl]-s-triazine, 2,4,6-tris[2-hydroxy-4-(3-sec-butyloxy-2-hydroxypropyloxy)phenyl]-s-triazine, mixture of 4,6-bis-(2,4-dimethylphenyl)-2-(2-hydroxy-4-(3-dodecyloxy-2-hydroxypropoxy)-phenyl)-s-triazine and 4,6-bis-(2,4-dimethylphenyl)-2-(2-hydroxy-4-(3-tridecyloxy-2-hydroxypropoxy)-phenyl)-s-triazine, Tinuvin^{®} 400, Ciba Specialty Chemicals Corp., 4,6-bis-(2,4-dimethylphenyl)-2-(2-hydroxy-4-(3-(2-ethylhexyloxy)-2-hydroxypropoxy)-phenyl)-s-triazine and 4,6-diphenyl-2-(4-hexyloxy-2-hydroxyphenyl)-s-triazine.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-dibenzo[d,f][1,3,2]dioxaphosphepin, 6-fluoro-2,4,8,10-tetra-tert-butyl-12-methyl-dibenzo[d,g][1,3,2]dioxaphosphocin, bis(2,4-di-tert-butyl-6-methylphenyl) methyl phosphite, bis(2,4-di-tert-butyl-6-methylphenyl) ethyl phosphite, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite.
   Especially preferred are the following phosphites:
   Tris(2,4-di-tert-butylphenyl) phosphite (Irgafos^{®}168, Ciba Specialty Chemicals Corp.), tris(nonylphenyl) phosphite, 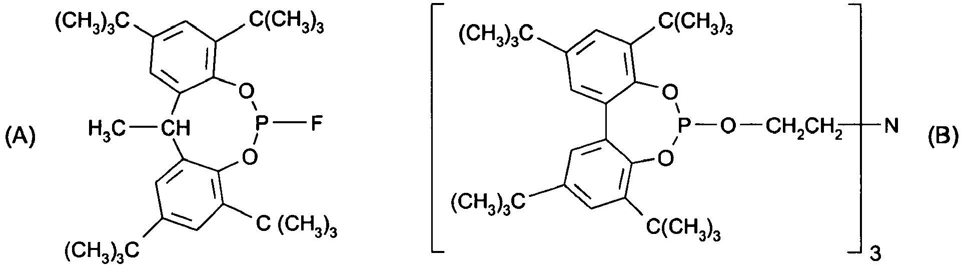 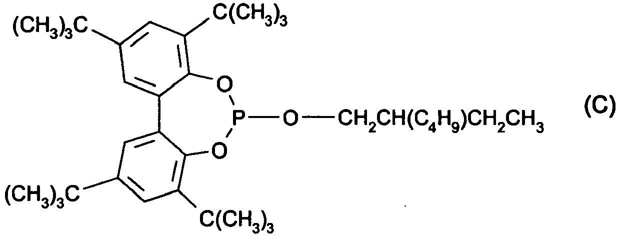 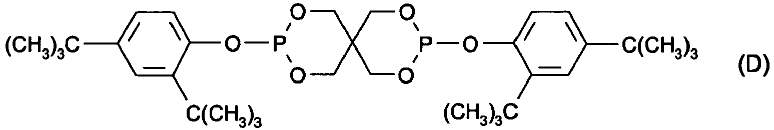 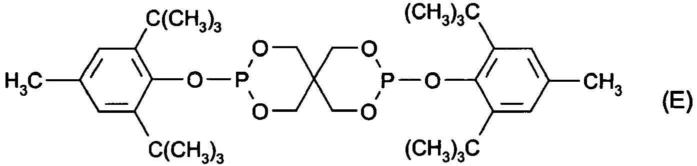 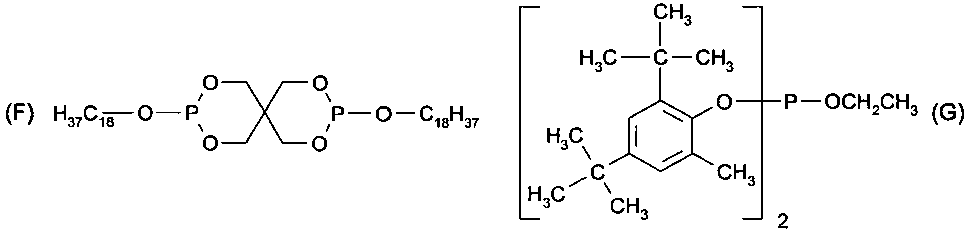
5. Hydroxylamines, for example N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N-methyl-N-octadecylhydroxylamine and the N,N-dialkylhydroxylamine derived from hydrogenated tallow amine.
6. Nitrones, for example N-benzyl-α-phenylnitrone, N-ethyl-α-methylnitrone, N-octyl-α-heptylnitrone, N-lauryl-α-undecylnitrone, N-tetradecyl-α-tridcylnitrone, N-hexadecyl-α-pentadecylnitrone, N-octadecyl-α-heptadecylnitrone, N-hexadecyl-α-heptadecylnitrone, N-ocatadecyl-α-pentadecylnitrone, N-heptadecyl-α-heptadecylnitrone, N-octadecyl-α-hexadecylnitrone, N-methyl-α-heptadecylnitrone and the nitrone derived from N,N-dialkylhydroxylamine derived from hydrogenated tallow amine.
7. Amine oxides, for example amine oxide derivatives as disclosed in U.S. Patent Nos. 5,844,029 and 5,880,191, didecyl methyl amine oxide, tridecyl amine oxide, tridodecyl amine oxide and trihexadecyl amine oxide.
8. Benzofuranones and indolinones, for example those disclosed in U.S. Pat. Nos. 4,325,863, 4,338,244, 5,175,312, 5,216,052, 5,252,643 5,369,159 5,356,966 5,367,008 5,428,177 or 5,428,162 or 3-[4-(2-acetoxyethoxy)phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, 3-(2-acetyl-5-isooctylphenyl)-5-isooctylbenzofuran-2-one and 3-(2,3-dimethylphenyl)-5,7-di-tert-butyl-benzofuran-2-one.
9. Thiosynergists, for example dilauryl thiodipropionate or distearyl thiodipropionate.
10. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
11. Polvamide stabilizers, for example copper salts in combination with iodides and/or phosphorus compounds and salts of divalent manganese.
12. Basic co-stabilizers, for example melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids, for example, calcium stearate, zinc stearate, magnesium behenate, magnesium stearate, sodium ricinoleate and potassium palmitate, antimony pyrocatecholate or zinc pyrocatecholate.
13. Nucleating agents, for example inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers).
14. Fillers and reinforcing agents, for example calcium carbonate, silicates, glass fibers, glass bulbs, asbestos, talc, kaolin, mica, barium sulfate, metal oxides and hydroxides, carbon black, graphite, wood flour and flours or fibers of other natural products, synthetic fibers.
15. Dispersing Agents, such as polyethylene oxide waxes or mineral oil.
16. Other additives, for example plasticizers, lubricants, emulsifiers, pigments, dyes, optical brighteners, rheology additives, catalysts, flow-control agents, slip agents, crosslinking agents, crosslinking boosters, halogen scavengers, smoke inhibitors, flameproofing agents, antistatic agents, clarifiers such as substituted and unsubstituted bisbenzylidene sorbitols, benzoxazinone UV absorbers such as 2,2'-p-phenylene-bis(3,1-benzoxazin-4-one), Cyasorb^{®} 3638 (CAS# 18600-59-4), and blowing agents.

Of interest are compositions comprising as further additives one or more additives selected from the group consisting of the hydroxylamine stabilizers, the organic phosphorus stabilizers, the benzofuranone stabilizers and the hydroxyphenylbenzotriazole, hydroxyphenyl-s-triazine or benzophenone ultraviolet light absorbers.

Nano-scaled fillers, or nanocomposites, may also be employed in the present compositions. Included are "nanoclays", disclosed for example in U.S. Pat. Nos. 5,853,886 and 6,020,419.

Nano-scaled fillers are for example phyllosilicates or smectite clays, for example organophilic phyllosilicates, naturally occuring phyllosilicates, synthetic phyllosilicates or a mixture of such phyllosilicates. The present nano-scaled fillers are for example montmorillonites, bentonites, beidellites, hectorites, saponites or stevensites.

For example, nano-scaled montmorillonites have a "platey" or platelet structure. The platelets generally have a thickness below about 2 nm. The platelets or particles generally have an average diameter between about 20 and about 30,000 nm, and a ratio of length to width of between about 30,000:1 and 20:1. Commercially available nano-scaled montmorillonites of such structure are Nanomer^{®} I.42E, available from Nanocor, and Cloisite^{®} 30B, available from Southern Clay.

Nano-scaled fillers possess an extremely large surface with high surface energy. The deactivation of the surface energy and the compatibilization of the nano-scaled fillers with a polymer is therefore even more important than with a common micro-scaled filler in order to avoid coagulation and reach an excellent dispersion of the nano-scaled filled in the polymer. The nano-scaled fillers like the phyllosilicates are made organophilic by ion exchange, for example with alkylammonium salts. Such nano-scaled organophilic phyllosilicates are better swellable and easier to disperse in a polymer matrix.

Treated nano-scaled fillers are also referred to as "treated layered clay material" or "organo-clay".

The nano-scaled filler is present in the compositions of the present invention at a concentration of about 0.5 to about 10% by weight, based on the weight of the polyolefin, for example, about 1 to about 9% by weight, for instance about 3 to about 7% by weight, for example about 5% by weight, based on the weight of the polyolefin.

The present polyolefin compositions exhibit good weatherability (stability towards heat, oxygen and light), scratch resistance, good processability, good mechanical strength, good gloss retention, and are non-sticky. The polyolefin molded parts are suitable for example for automotive applications, i.e. bumper fascia and the like.

The present polyolefin compositions may also be for example in the form of sheets, part of multilayer structures, wire or cable insulation, films or composites.

For example, the compositions of the present invention are useful for many applications, for example outdoor applications, including:
Thermoplastic olefins
Paintable thermoplastic olefins
Polypropylene molded articles
Polyethylene film
Grease-filled wire and cable insulation
Polyolefin tanks or containers containing chemicals
Polyolefin films with an antifog agent
Polyolefin films with IR thermal fillers such as hydrotalcites, e.g. DHT4A
Polyolefin films with an antistatic agent
Flame-resistant molded polypropylene articles
Flame-resistant molded thermoplastic olefins
Flame-resistant polyethylene film
Pre-formed films for lamination to plastic substrates
Electronic appliances
Containers, boxes, bins for storage and transportation
Automotive applications e.g. bumper fascia, dashboard, back board
Furniture e.g. stadium seats, public seats
Roofing sheets
Roofing membranes
Flooring materials
Liners
Profiles, for example window and door profiles
Polyolefin tapes
Geomembranes
Banner films
Thermoplastic electrical parts (plugs, sockets or wire insulations)
Polyolefin Hollow Articles by the Rotomolding Process
Natural products composites

The present compositions are also useful for expandable polypropylene and expandable polyethylene foams (EPP and EPE).

The present compositions exhibit, besides an anti-scratch effect also an anti-squeak (anti-noise) effect and an anti-stress-whitening (anti-marking) effect, for example anti-squeak and anti-whitening effects during production of polyolefin articles.

The following Examples illustrate the invention in more detail. Unless otherwise indicated, all percentages are in parts by weight.

### Example 1: Scratch resistance of polypropylene.

The present functionalized olefin polymers b) are:
b1) polymer of C₂₂-C₂₆ alpha-olefin with maleic anhydride,
b2) tallow fatty alcohol ester of the polymer of C₂₂-C₂₆ alpha-olefin with maleic anhydride: 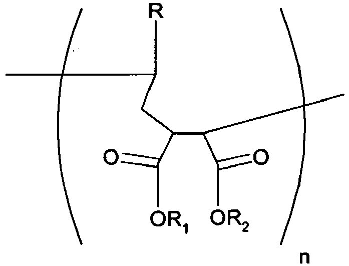 where R₁ and R₂ are tallow, R is C₂₀-C₂₄ alkyl and n is an average value of about 45,
b3) maleic acid grafted polypropylene or
b4) tallow fatty alcohol ester of the maleic acid grafted polypropylene.

The present fatty acid amides of component c) are:
c1) stearyl erucamide or
c2) oleyl palmitamide.

The present low molecular weight sterically hindered amines are:
d i1) bis(2,2,6,6-tetramethylpiperidin-4-yl) sebacate (HALS 2)),
d i2) bis(1-octyloxy-2,2,6,6-tetramethylpiperidyl) sebacate (HALS 6)),
d i3) 1-(2-hydroxy-2-methylpropoxy)-4-octadecanoyloxy-2,2,6,6-tetramethylpiperidine (HALS 14)) or
d i4) bis(1-(2-hydroxy-2-methylpropoxy)-2,2,6,6-tetramethylpiperidin-4-yl) sebacate (HALS 15)).

The high molecular weight hindered amine stabilizers are:
d ii1) the reaction product of 2,4-bis[(1-cyclohexyloxy-2,2,6,6-piperidin-4-yl)-butylamino]-6-chloro-s-triazine with N,N'-bis(3-aminopropyl)ethylenediamine) (HALS 33)),
d ii2) the condensate of 1-(2-hydroxyethyl)-2,2,6,6-tetramethyl-4-hydroxypiperidine and succinic acid (HALS 34)),
d ii3) linear or cyclic condensates of N, N'-bis(2,2,6,6-tetramethyl-4-piperidyl)-hexamethylenediamine and 4-tert-octylamino-2,6-dichloro-1,3,5-triazine (HALS 35)),
d ii4) linear or cyclic condensates of N,N'-bis-(2,2,6,6-tetramethyl-4-piperidyl)hexamethylenediamine and 4-morpholino-2,6-dichloro-1,3,5-triazine (HALS 37)),
d ii5) linear or cyclic condensates of N,N'-bis-(1,2,2,6,6-pentamethyl-4-piperidyl)hexamethylenediamine and 4-morpholino-2,6-dichloro-1,3,5-triazine (HALS 38)),
d ii6) the condensate of 2-chloro-4,6-bis(4-n-butylamino-2,2,6,6-tetramethylpiperidyl)-1,3,5-triazine and 1,2-bis(3-aminopropylamino)ethane (HALS 39)) or
d ii7) the oligomeric compound which is the condensation product of 4,4'-hexamethylene-bis(amino-2,2,6,6-tetramethylpiperidine) and 2,4-dichloro-6-[(2,2,6,6-tetra-methylpiperidin-4-yl)butylamino]-s-triazine end-capped with 2-chloro-4,6-bis(di-butylamino)-s-triazine (HALS 44)).

A 2:1 weight:weight blend of the carboxylic acid reagent functionalized olefin polymer b) to the primary or secondary fatty acid amide c) is prepared. Likewise, 1:1 weight:weight blends and 1:2 weight:weight blends are prepared.

The components b) and c) are present at weight levels, in total, of 3%, based on the weight of the polypropylene.

The hindered amines of component d) are present at weight levels of 1%, 2% and 3%, based on the polypropylene.

The weight:weight ratio of the low mol. wt. hindered amines to the high mol. weight hindered amines is about 1:1.

Other additives evaluated for comparative performance are oleamide, stearyl erucamide and Dow Corning MB 50-321 polysiloxane additive. Weight percents are on polypropylene. The additives are compounded in impact modified copolymer polypropylene (PROFAX 7523 commercially available from Basell) and high impact polypropylene (3-5 melt flow) containing 20-30% talc and 2-3% carbon black. All compounding is done using 25 mm twin-screw extruder using industry standard conditions. All of the formulations also contain stabilizers such as a hydroxyphenylbenzotriazole or a tris-aryl-s-triazine ultraviolet light absorber, a hindered phenolic antioxidant and an organic phosphorus processing stabilizer. Injection molded plaques are made from the compounded samples using BOY 50-M injection molding machine using standard conditions.

Several tests are performed to evaluate scratch resistance before and after weathering, in addition to impact properties.

Standard Five Finger Scratch test guidelines (Daimler Chrysler Corporation Test Number LP-463DD-18-1, dated 2002-07-24)

| Rating | Scratch Width | Whitening |
|---|---|---|
| 1 (best) | <0.2 mm wide, almost invisible | none |
| 2 | 0.2-0.3 mm wide, slight deformation, visible at close range | none |
| 3 | 0.3-0.4 mm wide, clearly visible | |
| 4 | 0.4-0.5 mm wide | visible whitening over entire scratch |
| 5 (worst) | >0.5 mm wide | white over entire scratch and possibly accompanied by debris |

The present inventive blends provide for excellent scratch resistance and are non-sticky.

Results after Weathering: In a separate detailed study, results are shown after weathering. Xenon arc WeatherOmeter at 0.55 W/m² irradiance (340 nm), SAE J 1885 - NAFTA interior automotive protocol, 89°C black panel temperature, dry conditions. Scratch resistance to 600 kJ/m² is desirable. Standard five-finger test ratings are measured.

After 600 KJS weathering, the present inventive blends exhibit outstanding scratch resistance.

Plaques containing stearyl erucamide alone become sticky after exposure to 600KJS. The inventive blend gives a surprising synergistic effect without any adverse effect upon weathering. That is, the inventive blends provide for excellent scratch resistance and weathering stability, and are non-sticky.

Modified Taber Abrasion Test: Visual inspection guidelines

| Rating | Scratch Width | Relative Performance |
|---|---|---|
| 1 (best) | <50 mm | excellent |
| 2 | 200-300 mm | good |
| 3 | 300-400 mm | fair |
| 4 | 400-500 mm | poor |
| 5 (worst) | >500 mm | very poor |

The present inventive blends provide for excellent abrasion resistance according to the Taber Abrasion Test.

The present inventive additive blends provide for excellent impact strength according to the Notched Izod Impact test.

### Example 2: Surface Tack of polyolefins.

The fatty acid amide components, although necessary as part of the present antiscratch additive package, may cause "stickiness" or "surface tack". Formulations with erucamide and different hindered amine light stabilizers are tested for surface tack.

The formulations are prepared in thermoplastic olefin (TPO) via melt compounding. The TPO formulations are extruded at 200 to 220°C in a Leistritz twin screw extruder, 27 mm, co-rotating screws. The TPO formulations are injection molded at a melt temperature of 200 to 240°C, holding pressure of 500 psi, injection pressure stage 1 of 700 psi, back pressure of 200 psi, mold temperature of 70°C. The finished TPO products are 3.2 mm thick, 10 cm by 15.3 cm smooth, flat plaques.

The plaques are allowed to stand at room temperature and ambient humidity for at least 24 hours before initiating any exposure testing. Molded plaques are exposed for various intervals in accelerated weathering. UV exposures are conducted according to SAE J 1885 protocol. Exposure designated as kJ/m² at 340 nm.

Test specimens are removed at various intervals while the samples are hot. An LDPE film is placed on each plaque completely covering the surface. Plaque-film composites are then stacked together (no more than 10 high) separated with Teflon spacers. A 5 kg weight is placed on the stack which is allowed to equilibrate for 30 minutes at room temperature. After 30 minutes under the 5 kg weight, the stack of composites is carefully separated making sure not to disturb the film on any of the plaque surfaces. A plaque-film assembly is then placed on a Kayeness Film Block-Reblock Tester Model #D-9046 with the plaque on the stationary platen and secured with two magnetic strips. The Film Block Tester is activated and the weight necessary to separate the film from the plaque is recorded. A weight of 14-20 g is a "zero" value. A weight of 212 g is a maximum value. This means that a measurement of 212 g may in fact have taken substantially more than 212 g to separate the film from the plaque.

The LDPE film is produced on a blown film line using unstabilized polymer (to ensure that no migration of additives occurs).

The side of the plaque that faces the xenon lamp is tested for surface tack.

Formulations:
1) 0.9 weight percent erucamide
2) 0.9 weight percent erucamide and 0.2 weight percent of the hindered amine 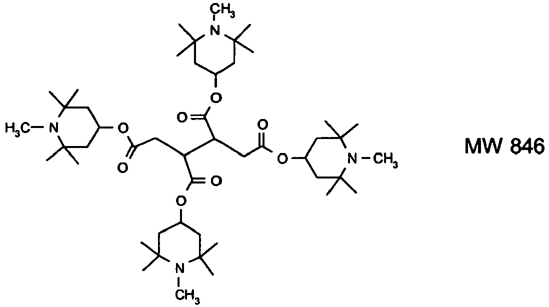
3) 0.9 weight percent erucamide and 0.2 weight percent of the hindered amine 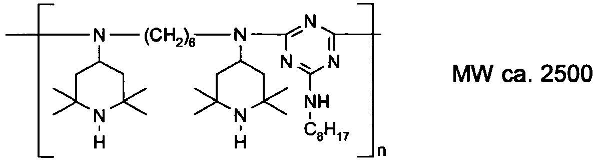
4) 0.9 weight percent erucamide and 0.2 weight percent of the hindered amine 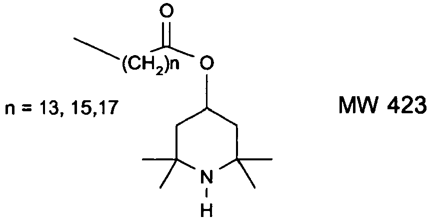
5) 0.9 weight percent erucamide and 0.2 weight percent of a 1:1 weight combination of 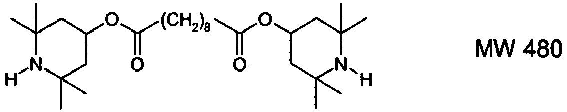 and

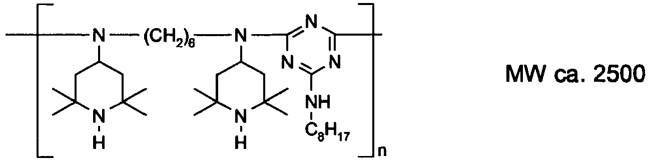

The results are disclosed in Table 1.

**Table 1:**

| Formulation | Tack Test (grams) at 352 kJ/m² |
|---|---|
| 1 | 212 (maximum) |
| 2 | 48 |
| 3 | 212 (maximum) |
| 4 | 186 |
| 5 | 26 (present invention) |

It is seen that the formulations of the present invention, containing a high molecular weight hindered amine and a low molecular weight hindered amine, are superior towards surface tack (lowest weight to separate the film from the plaque).

The formulation with only a high molecular weight hindered amine fails (at least maximum weight required, formulation 3).

The formulation with only a low molecular weight hindered amine performs poorly (formulation 4).

The formulation with a hindered amine with a molecular weight that is between low and high is about twice as sticky as the inventive formulation.

### Example 3: Multilayer Polymer Structures.

The present components b) and c) have utility as anti-scratch additives in polyolefin layers present in multilayer polymer structures. Examples of such polymer structures include but are not limited to:
1.) Sheets and signs as seen in United States Patent Nos. 6,150,440 and 5,387,458.
2.) Solar Control Films of Various Construction as seen in United States Patent Nos. 3,290,203; 3,681,179; 3,776,805 and 4,095,013.
3.) Base stock or cap stock for coextrusion structures such as window profiles, laminates over automotive bumpers or auto exterior panels.

A multilayer polymer composite is prepared by different routes, such as co-extrusion of one or more polymer compositions to form the multilayer composite. Alternatively, compression molding or thermoforming of polymer compositions produces the desired polymer composite. In particular, these techniques are used in the manufacture of signage, typically composed of one or more layers of polymeric materials formed on top of a base material (metal sheet, plastic, etc).

### Example 4: TPO Roofing Membranes.

The polyolefin molded articles of this invention may be used for example as roofing membranes, siding, window profiles and moldings. Such molded articles are for example about 0.127 mm to about 2.54 mm thick. The polyolefin is in particular thermoplastic polyolefin (TPO). The molded articles of this invention exhibit excellent scratch resistance.

A typical state of the art formulation for such applications is for example:

| | parts |
|---|---|
| Polypropylene copolymer | 100 |
| TiO₂ or carbon black | 3 |
| CaCo₃ | 5 |
| Magnesium hydroxide | 35 |
| UV stabilizer | 1 |
| Lubricant or other | 1 |
| Flame retardant | 6 |
| Present anti-scratch system | 3 |

### Example 5: Scratch resistance of polyethylene and polypropylene films.

Film grade polyethylene is dry blended with test additives and then melt compounded into pellets. The pelletized fully formulated resin is then blown at 205°C using a MPM Superior Blown film extruder.

The films exhibit excellent scratch resistance.

Film grade polypropylene is handled in a similar fashion and polypropylene films containing the present additive combinations also show excellent scratch resistance.

### Example 6: Preparation of polyolefin hollow articles by the rotomolding process.

100 parts by weight medium density polyethylene, copolymerized with hexene (Novapol^{®} TR-0735, nominal melt index 6.8 g/10 minutes, density 0.935 g/cm³) are dry blended with 0.050 parts of calcium stearate and a combination of additional stabilizers (see below). The mixtures are melt compounded into pellets at 232°C in a Superior/MPM extruder using a 24:1 L/D screw with Maddock mixing head at 100 rpm.

The compounded pellets are ground to a uniform particle size (150-500 µm) prior to the rotational molding process. This grinding step increases the surface area of the particles leading to a faster heat absorption, and thus reducing overall energy consumption.

The rotational molding process is performed in a laboratory scale equipment FSP M20 "Clamshell". The ground resin is placed in a cast aluminum mold, which is rotated biaxially in a gas fired oven. Hot air is circulated by blowers in the chamber while the temperature is increased to 288°C within 4 minutes. This temperature is maintained for a specific time. Subsequently, the oven is opened and while still rotating, the mold is cooled with forced air circulation for 7 minutes, followed by water spray mist for 7 minutes, and an additional air cooling step for 2 minutes. Throughout the entire heating and cooling cycles, the speed of the major axis is maintained at 6 rpm with a 4.5 : 1 ratio of rotation. After the cooling cycles, the mold is opened and the hollow object removed.

Present formulations are additionally blended with a combination of 0.100 parts of a phosphite processing stabilizer, 0.050 parts of a dialkylhydroxylamine processing stabilizer, 0.200 parts of a hindered amine combination and 3 parts of a present anti-scratch additive combination. The articles exhibit excellent scratch resistance.

### Example 7: Natural Products Composites.

Natural products composites are provided by the combination of wood fibers or flour (sawdust), coconut shells, sugar cane begasse, flax, hemp, jute, kenaf, rice husk and the like with thermoplastic resins. They may for example be natural fiber/plastic composites as disclosed in U.S. Pat. Nos. 6,290,885 and 6,511,757. Both the thermoplastic resin component and the natural products component may come from recycled materials.

The composites are in the form of extruded products, for example, pressed wood, particle board, chip board, wafer board, plywood, laminated materials and the like.

The composites may be employed as construction and building materials, for example decking, fencing, frames and molding, window and door profiles, shingles, roofing, siding and the like. They may be employed in for example automotive applications, e.g. interior panels, rear shelves, and spare tire covers. The natural products composites are suitable for infrastructure applications, for example boardwalks, docks and related structures. They may also be used in consumer/industrial applications, for instance as picnic tables, park benches, pallets, etc. The composites may be used to replace parts currently being produced from wood, thermoplastics or metal, or combinations thereof.

To a 1:1 mixture of 100 parts by weight wood flour/PE is added about 3 weight percent of present components b) and c). The mixtures are processed in a Haake mixer at 160°C and the processed material is compression molded at 193°C into 1.0 mm plaques. The plaques exhibit excellent scratch resistance.

## Claims

1. A polyolefin composition comprising
a) a polyolefin substrate and
an amount effective to improve the scratch resistance and light stability of said polyolefin substrate of an additive combination of
b) a carboxylic acid reagent functionalized olefin polymer or copolymer,
c) a primary or secondary fatty acid amide and
d) a combination of
i) a low molecular weight sterically hindered amine light stabilizer and
ii) a high molecular weight sterically hindered amine light stabilizer.

2. A composition according to claim 1 wherein component (a) is polypropylene, polyethylene or thermoplastic polyolefin.

3. A composition according to claim 1 wherein component (b) is an olefin polymer or copolymer grafted with an alpha, beta-unsaturated carboxylic acid reagent.

4. A composition according to claim 1 wherein component (b) is an olefin polymer or copolymer grafted with an alpha, beta-unsaturated carboxylic acid reagent selected from the group consisting of acrylic acid, methacrylic acid, methyl acrylate, methyl methacrylate, 2-hydroxypropyl methacrylate, butyl acrylate and maleic anhydride.

5. A composition according to claim 1 wherein component (b) is an olefin polymer or copolymer grafted with maleic anhydride.

6. A composition according to claim 1 wherein component (c) is stearyl erucamide or oleyl palmitamide.

7. A composition according to claim 1 wherein the low molecular weight hindered amines have a molecular weight of from 200 to 1000 g/mol and the high molecular weight hindered amines have a molecular weight of from 1200 to 10,000 g/mol.

8. A composition according to claim 1 wherein the low molecular weight hindered amines are selected from the group consisting of
1) 1-cyclohexyloxy-2,2,6,6-tetramethyl-4-octadecylaminopiperidine,
2) bis(2,2,6,6-tetramethylpiperidin-4-yl) sebacate,
3) bis(1-acetoxy-2,2,6,6-tetramethylpiperidin-4-yl) sebacate,
4) bis(1,2,2,6,6-pentamethyl-4-yl) sebacate,
5) bis(1-cyclohexyloxy-2,2,6,6-tetramethylpiperidin-4-yl) sebacate,
6) bis(1-octyloxy-2,2,6,6-tetramethylpiperidin-4-yl) sebacate;
7) bis(1-acyl-2,2,6,6-tetramethylpiperidin-4-yl) sebacate,
8) bis(1,2,2,6,6-pentamethyl-4-piperidyl) n-butyl-3,5-di-tert-butyl-4-hydroxybenzylmalonate
9) 2,4-bis[(1-cyclohexyloxy-2,2,6,6-tetramethylpiperidin-4-yl)butylamino]-6-(2-hydroxyethylamino-s-triazine,
10) bis(1-cyclohexyloxy-2,2,6,6-tetramethylpiperidin-4-yl) adipate,
11) 2,4-bis[(1-cyclohexyloxy-2,2,6,6-piperidin-4-yl)butylamino]-6-chloro-s-triazine,
12) 1-(2-hydroxy-2-methylpropoxy)-4-hydroxy-2,2,6,6-tetramethylpiperidine,
13) 1-(2-hydroxy-2-methylpropoxy)-4-oxo-2,2,6,6-tetramethylpiperidine,
14) 1-(2-hydroxy-2-methylpropoxy)-4-octadecanoyloxy-2,2,6,6-tetramethylpiperidine,
15) bis(1-(2-hydroxy-2-methylpropoxy)-2,2,6,6-tetramethylpiperidin-4-yl) sebacate,
16) bis(1-(2-hydroxy-2-methylpropoxy)-2,2,6,6-tetramethylpiperidin-4-yl) adipate,
17) 2,4-bis{N-[1-(2-hydroxy-2-methylpropoxy)-2,2,6,6-tetramethylpiperidin-4-yl]-N-butylamino}-6-(2-hydroxyethylamino)-s-triazine,
18) 4-benzoyl-2,2,6,6-tetramethylpiperidine,
19) di-(1,2,2,6,6-pentamethylpiperidin-4-yl) p-methoxybenzylidenemalonate,
20) 4-stearyloxy-2,2,6,6-tetramethylpiperidine,
21) bis(1-octyloxy-2,2,6,6-tetramethylpiperidyl) succinate,
22) 1,2,2,6,6-pentamethyl-4-aminopiperidine,
23) 2-undecyl-7,7,9,9-tetramethyl-1-oxa-3,8-diaza-4-oxo-spiro[4.5]decane,
24) tris(2,2,6,6-tetramethyl-4-piperidyl) nitrilotriacetate,
25) tris(2-hydroxy-3-(amino-(2,2,6,6-tetramethylpiperidin-4-yl)propyl) nitrilotriacetate,
26) tetrakis(2,2,6,6-tetramethyl-4-piperidyl)-1,2,3,4-butane-tetracarboxylate,
27) tetrakis(1,2,2,6,6-pentamethyl-4-piperidyl)-1,2,3,4-butane-tetracarboxylate,
28) 1,1'-(1,2-ethanediyl)-bis(3,3,5,5-tetramethylpiperazinone),
29) 3-n-octyl-7,7,9,9-tetramethyl-1,3,8-triazaspiro[4.5]decan-2,4-dione,
30) 8-acetyl-3-dodecyl-7,7,9,9-tetramethyl-1,3,8-triazaspiro[4.5]decane-2,4-dione,
31) 3-dodecyl-1-(2,2,6,6-tetramethyl-4-piperidyl)pyrrolidin-2,5-dione,
32) 3-dodecyl-1-(1,2,2,6,6-pentamethyl-4-piperidyl)pyrrolidine-2,5-dione and
33) N,N'-bis-formyl-N,N'-bis(2,2,6,6-tetramethyl-4-piperidyl)hexamethylenediamine and the high molecular weight hindered amines are selected from the group consisting of 34) the reaction product of 2,4-bis[(1-cyclohexyloxy-2,2,6,6-piperidin-4-yl)butylamino]-6-chloro-s-triazine with N,N'-bis(3-aminopropyl)ethylenediamine),
35) the condensate of 1-(2-hydroxyethyl)-2,2,6,6-tetramethyl-4-hydroxypiperidine and succinic acid,
36) linear or cyclic condensates of N,N'-bis(2,2,6,6-tetramethyl-4-piperidyl)-hexamethylenediamine and 4-tert-octylamino-2,6-dichloro-1,3,5-triazine,
37) linear or cyclic condensates of N,N'-bis(2,2,6,6-tetramethyl-4-piperidyl)-hexamethylenediamine and 4-cyclohexylamino-2,6-dichloro-1,3,5-triazine,
38) linear or cyclic condensates of N,N'-bis-(2,2,6,6-tetramethyl-4-piperidyl)-hexamethylenediamine and 4-morpholino-2,6-dichloro-1,3,5-triazine,
39) linear or cyclic condensates of N,N'-bis-(1,2,2,6,6-pentamethyl-4-piperidyl)-hexamethylenediamine and 4-morpholino-2,6-dichloro-1,3,5-triazine,
40) the condensate of 2-chloro-4,6-bis(4-n-butylamino-2,2,6,6-tetramethylpiperidyl)-1,3,5-triazine and 1,2-bis(3-aminopropylamino)ethane,
41) the condensate of 2-chloro-4,6-di-(4-n-butylamino-1,2,2,6,6-pentamethylpiperidyl)-1,3,5-triazine and 1,2-bis-(3-aminopropylamino)ethane,
42) a reaction product of 7,7,9,9-tetramethyl-2-cycloundecyl-1-oxa-3,8-diaza-4-oxospiro[4.5]decane and epichlorohydrin,
43) poly[methyl,(3-oxy-(2,2,6,6-tetramethylpiperidin-4-yl)propyl)] siloxane, CAS#182635-99-0,
44) reaction product of maleic acid anhydride-C₁₈-C₂₂-a-Olefin-copolymer with 2,2,6,6-tetramethyl-4-aminopiperidine,
45) the oligomeric compound which is the condensation product of 4,4'-hexamethylene-bis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine,
46) the oligomeric compound which is the condensation product of 4,4'-hexamethylene-bis(amino-1,2,2,6,6-pentamethylpiperidine) and 2,4-dichloro-6-[(1,2,2,6,6-pentamethylpiperidin-4-yl)butylamino]-s-triazine end-capped with 2-chloro-4,6-bis(dibutylamino)-s-triazine,
47) the oligomeric compound which is the condensation product of 4,4'-hexamethylene-bis(amino-1-propoxy-2,2,6,6-tetramethylpiperidine) and 2,4-dichloro-6-[(1-propoxy-2,2,6,6-tetramethylpiperidin-4-yl)butylamino]-s-triazine end-capped with 2-chloro-4,6-bis(dibutylamino)-s-triazine,
48) the oligomeric compound which is the condensation product of 4,4'-hexamethylene-bis(amino-1-acyloxy-2,2,6,6-tetramethylpiperidine) and 2,4-dichloro-6-[(1-acyloxy-2,2,6,6-tetramethylpiperidin-4-yl)butylamino]-s-triazine end-capped with 2-chloro-4,6-bis(dibutylamino)-s-triazine and
49) product obtained by reacting a product, obtained by reacting 1,2-bis(3-aminopropylamino)ethane with cyanuric chloride, with (2,2,6,6-tetramethyl-piperidin-4-yl)butylamine.

9. A composition according to claim 1 wherein the low molecular weight hindered amines are selected from the group consisting of
2) bis(2,2,6,6-tetramethylpiperidin-4-yl) sebacate,
6) bis(1-octyloxy-2,2,6,6-tetramethylpiperidyl) sebacate,
14) 1-(2-hydroxy-2-methylpropoxy)-4-octadecanoyloxy-2,2,6,6-tetramethylpiperidine, and
15) bis(1-(2-hydroxy-2-methylpropoxy)-2,2,6,6-tetramethylpiperidin-4-yl) sebacate,
and the high molecular weight hindered amines are selected from the group consisting of
34) the reaction product of 2,4-bis[(1-cyclohexyloxy-2,2,6,6-piperidin-4-yl)-butylamino]-6-chloro-s-triazine with N,N'-bis(3-aminopropyl)ethylenediamine),
35) the condensate of 1-(2-hydroxyethyl)-2,2,6,6-tetramethyl-4-hydroxypiperidine and succinic acid,
36) linear or cyclic condensates of N,N'-bis(2,2,6,6-tetramethyl-4-piperidyl)-hexamethylenediamine and 4-tert-octylamino-2,6-dichloro-1,3,5-triazine,
38) linear or cyclic condensates of N,N'-bis-(2,2,6,6-tetramethyl-4-piperidyl)-hexamethylenediamine and 4-morpholino-2,6-dichloro-1,3,5-triazine,
39) linear or cyclic condensates of N,N'-bis-(1,2,2,6,6-pentamethyl-4-piperidyl)-hexamethylenediamine and 4-morpholino-2,6-dichloro-1,3,5-triazine,
40) the condensate of 2-chloro-4,6-bis(4-n-butylamino-2,2,6,6-tetramethylpiperidyl)-1,3,5-triazine and 1,2-bis(3-aminopropylamino)ethane, and
45) the oligomeric compound which is the condensation product of 4,4'-hexamethylene-bis(amino-2,2,6,6-tetramethylpiperidine) and 2,4-dichloro-6-[(2,2,6,6-tetramethylpiperidin-4-yl)butylamino]-s-triazine end-capped with 2-chloro-4,6-bis(dibutylamino)-s-triazine.

10. A composition according to claim 1 further comprising one or more additives selected from the group consisting of the hydroxylamine stabilizers, the organic phosphorus stabilizers, the benzofuranone stabilizers and the hydroxyphenylbenzotriazole, hydroxyphenyl-s-triazine or benzophenone ultraviolet light absorbers.

11. A method for providing scratch resistance and light stability to a polyolefin substrate, which method comprises incorporating into said polyolefin an effective amount of an additive combination of
b) a carboxylic acid reagent functionalized olefin polymer or copolymer,
c) a primary or secondary fatty acid amide and
d) a combination of
i) a low molecular weight sterically hindered amine light stabilizer and
ii) a high molecular weight sterically hindered amine light stabilizer.

12. Use of an additive combination of
b) a carboxylic acid reagent functionalized olefin polymer or copolymer,
c) a primary or secondary fatty acid amide and
d) a combination of
i) a low molecular weight sterically hindered amine light stabilizer and
ii) a high molecular weight sterically hindered amine light stabilizer,
for improving the scratch resistance and light stability of a polyolefin substrate.

13. A poyolefin composition according to claim 1 where
i) is bis(2,2,6,6-tetramethylpiperidin-4-yl) sebacate and
ii) is a linear or cyclic condensate of N,N'-bis(2,2,6,6-tetramethyl-4-piperidyl)-hexamethylenediamine and 4-tert-octylamino-2,6-dichloro-1,3,5-triazine.

## Patentansprüche

1. Polyolefinzusaznmensetzung, umfassend
a) ein Polyolefinsubstrat und
eine zur Verbesserung der Kratzfestigkeit und Lichtstabilität des Polyolefinsubstrats wirksame Menge einer Additivkombination von
b) einem mit einem Carbonsäurereagenz funktionalisierten Olefinpolymer oder -copolymer,
c) einem primären oder sekundären Fettsäureamid und
d) einer Kombination von
i) einem niedermolekularen sterisch gehinderten Amin-Lichtschutzmittel und
ii) einem hochmolekularen sterisch gehinderten Amin-Lichtschutzmittel.

2. Zusammensetzung nach Anspruch 1, wobei es sich bei Komponente (a) um Polypropylen, Polyethylen oder thermoplastisches Polyolefin handelt.

3. Zusammensetzung nach Anspruch 1, wobei es sich bei Komponente (b) um ein Olefinpolymer oder -copolymer, das mit einem alpha,beta-ungesättigten Carbonsäurereagenz gepfropft ist, handelt.

4. Zusammensetzung nach Anspruch 1, wobei es sich bei Komponente (b) um ein Olefinpolymer oder -copolymer, das mit einem alpha,beta-ungesättigten Carbonsäurereagenz aus der Gruppe bestehend aus Acrylsäure, Methacrylsäure, Methylacrylat, Methylmethacrylat, 2-Hydroxypropylmethacrylat, Butylacrylat und Maleinsäureanhydrid gepfropft ist, handelt.

5. Zusammensetzung nach Anspruch 1, wobei es sich bei Komponente (b) um ein Olefinpolymer oder -copolymer, das mit Maleinsäureanhydrid gepfropft ist, handelt.

6. Zusammensetzung nach Anspruch 1, wobei es sich bei Komponente (c) um Stearylerucamid oder Oleylpalmitamid handelt.

7. Zusammensetzung nach Anspruch 1, wobei die niedermolekularen gehinderten Amine ein Molekulargewicht von 200 bis 1000 g/mol aufweisen und die hochmolekularen gehinderten Amine ein Molekulargewicht von 1200 bis 10.000 g/mol aufweisen.

8. Zusammensetzung nach Anspruch 1, wobei die niedermolekularen gehinderten Amine aus der Gruppe bestehend aus
1) 1-Cyclohexyloxy-2,2,6,6-tetramethyl-4-octa-decylaminopiperidin,
2) Bis(2,2,6,6-tetramethylpiperidin-4-yl)-sebacat,
3) Bis(1-acetoxy-2,2,6,6-tetramethylpiperidin-4-yl)sebacat,
4) Bis(1,2,2,6,6-pentamethyl-4-yl)sebacat,
5) Bis(1-cyclohexyloxy-2,2,6,6-tetramethylpiperidin-4-yl)sebacat,
6) Bis(1-octyloxy-2,2,6,6-tetramethylpiperidin-4-yl)sebacat,
7) Bis(1-acyl-2,2,6,6-tetramethylpiperidin-4-yl)sebacat,
8) Bis(1,2,2,6,6-pentamethyl-4-piperidyl)-n-butyl-3,5-di-tert.-butyl-4-hydroxybenzyl-malonat,
9) 2,4-Bis[(1-cyclohexyloxy-2,2,6,6-tetramethylpiperidin-4-yl)butylamino]-6-(2-hydroxyethyl-amino-s-triazin,
10) Bis(1-cyclohexyloxy-2,2,6,6-tetramethylpiperidin-4-yl)adipat,
11) 2,4-Bis[(1-cyclohexyloxy-2,2,6,6-piperidin-4-yl)butylamino]-6-chlor-s-triazin,
12) 1-(2-Hydroxy-2-methylpropoxy)-4-hydroxy-2,2,6,6-tetramethylpiperidin,
13) 1-(2-Hydroxy-2-methylpropoxy)-4-oxo-2,2,6,6-tetramethylpiperidin,
14) 1-(2-Hydroxy-2-methylpropoxy)-4-octadecanoyloxy-2,2,6,6-tetramethylpiperidin,
15) Bis(1-(2-hydroxy-2-methylpropoxy)-2,2,6,6-tetramethylpiperidin-4-yl)sebacat,
16) Bis(1-(2-hydroxy-2-methylpropoxy)-2,2,6,6-tetramethylpiperidin-4-yl)adipat,
17) 2,4-Bis{N-[1-(2-hydroxy-2-methylpropoxy)-2,2,6,6-tetramethylpiperidin-4-yl]-N-butyl-amino}-6-(2-hydroxyethylamino)-s-triazin,
18) 4-Benzoyl-2,2,6,6-tetramethylpiperidin,
19) Di(1,2,2,6,6-pentamethylpiperidin-4-yl)-p-methoxybenzylidenmalonat,
20) 4-Stearyloxy-2,2,6,6-tetramethylpiperidin,
21) Bis(1-octyloxy-2,2,6,6-tetramethylpiperidyl)-succinat,
22) 1,2,2,6,6-Pentamethyl-4-aminopiperidin,
23) 2-Undecyl-7,7,9,9-tetramethyl-1-oxa-3,8-diaza-4-oxospiro[4,5]decan,
24) Tris(2,2,6,6-tetramethyl-4-piperidyl)nitrilo-triacetat,
25) Tris(2-hydroxy-3-(amino(2,2,6,6-tetramethylpiperidin-4-yl)propyl)nitrilotriacetat,
26) Tetrakis(2,2,6,6-tetramethyl-4-piperidyl)-1,2,3,4-butantetracarboxylat,
27) Tetrakis(1,2,2,6,6-pentamethyl-4-piperidyl)-1,2,3,4-butantetracarboxylat,
28) 1,1'-(1,2-Ethandiyl)bis(3,3,5,5-tetramethyl-piperazinon),
29) 3-n-Octyl-7,7,9,9-tetramethyl-1,3,8-triaza-spiro[4.5]decan-2,4-dion,
30) 8-Acetyl-3-dodecyl-7,7,9,9-tetramethyl-1,3,8-triazaspiro[4.5]decan-2,4-dion,
31) 3-Dodecyl-1-(2,2,6,6-tetramethyl-4-piperidyl)pyrrolidin-2,5-dion,
32) 3-Dodecyl-1-(1,2,2,6,6-pentamethyl-4-piperidyl)pyrrolidin-2,5-dion und
33) N,N'-Bisformyl-N,N'-bis(2,2,6,6-tetramethyl-4-piperidyl)hexamethylendiamin ausgewählt sind und die hochmolekularen gehinderten Amine aus der Gruppe bestehend aus
34) dem Reaktionsprodukt aus 2,4-Bis[(1-cyclohexyloxy-2,2,6,6-piperidin-4-yl)butylamino]-6-chlor-s-triazin und N,N'-Bis(3-amino-propyl)ethylendiamin),
35) dem Kondensat aus 1-(2-Hydroxyethyl)-2,2,6,6-tetramethyl-4-hydroxypiperidin und Bernsteinsäure,
36) linearen oder cyclischen Kondensaten aus N,N'-Bis(2,2,6,6-tetramethyl-4-piperidyl)-hexamethylendiamin und 4-tert.-Octylamino-2,6-dichlor-1,3,5-triazin,
37) linearen oder cyclischen Kondensaten aus N,N'-Bis(2,2,6,6-tetramethyl-4-piperidyl)-hexamethylendiamin und 4-Cyclohexylamino-2,5-dichlor-1,3,5-triazin,
38) linearen oder cyclischen Kondensaten aus N,N'-Bis(2,2,6,6-tetramethyl-4-piperidyl)-hexamethylendiamin und 4-Morpholino-2,6-dichlor-1,3,5-triazin,
39) linearen oder cyclischen Kondensaten aus N,N'-Bis(1,2,2,6,6-pentamethyl-4-piperidyl)-hexamethylendiamin und 4-Morpholino-2,6-dichlor-1,3,5-triazin,
40) dem Kondensat aus 2-Chlor-4,6-bis(4-n-butyl-amino-2,2,6,6-tetramethylpiperidyl)-1,3,5-triazin und 1,2-Bis(3-aminopropylamino)ethan,
41) dem Kondensat aus 2-Chlor-4,6-di(4-n-butyl-amino-1,2,2,6,6-pentamethylpiperidyl)-1,3,5-triazin und 1,2-Bis(3-aminopropylamino)ethan,
42) einem Reaktionsprodukt aus 7,7,9,9-Tetramethyl-2-cycloundecyl-1-oxa-3,8-diaza-4-oxo-spiro[4,5]decan und Epichlorhydrin,
43) Poly[methyl(3-oxy-(2,2,6,6-tetramethylpiperidin-4-yl)propyl)]siloxan, CAS-Nr. 182635-99-0,
44) Reaktionsprodukt aus Maleinsäureanhydrid-C₁₈-C₂₂-α-Olefin-Copolymer und 2,2,6,6-Tetramethyl-4-aminopiperidin,
45) der oligomeren Verbindung, bei der es sich um das Kondensationsprodukt von 4,4'-Hexa-methylenbis(amino-2,2,6,6-tetramethylpiperidin) und 2,4-Dichlor-6-[(2,2,6,6-tetramethylpiperidin-4-yl)butylamino]-s-triazin, das mit 2-Chlor-4,6-bis(dibutylamino)-s-triazin endgruppenverschlossen ist, handelt,
46) der oligomeren Verbindung, bei der es sich um das Kondensationsprodukt von 4,4'-Hexamethylenbis(amino-1,2,2,6,6-pentamethylpiperidin) und 2,4-Dichlor-6-[(1,2,2,6,6-pentamethylpiperidin-4-yl)butylamino]-s-triazin, das mit 2-Chlor-4,6-bis(dibutylamino)-s-triazin endgruppenverschlossen ist, handelt,
47) der oligomeren Verbindung, bei der es sich um das Kondensationsprodukt von 4,4'-Hexamethylenbis(amino-1-propoxy-2,2,6,6-tetramethylpiperidin) und 2,4-Dichlor-6-[(1-propoxy-2,2,6,6-tetramethylpiperidin-4-yl)-butylamino]-s-triazin, das mit 2-Chlor-4,6-bis(dibutylamino)-s-triazin endgruppenverschlossen ist, handelt,
48) der oligomeren Verbindung, bei der es sich um das Kondensationsprodukt von 4,4'-Hexamethylenbis(amino-1-acyloxy-2,2,6,6-tetramethylpiperidin) und 2,4-Dichlor-6-[(1-acyloxy-2,2,6,6-tetramethylpiperidin-4-yl)butylamino]-s-triazin, das mit 2-Chlor-4,6-bis-(dibutylamino)-s-triazin endgruppenverschlossen ist, handelt, und
49) dem durch Reaktion eines durch Reaktion von 1,2-Bis(3-aminopropylamino)ethan mit Cyanurchlorid erhaltenen Produkts mit (2,2,6,6-Tetramethylpiperidin-4-yl)butylamin erhaltenen Produkt
ausgewählt sind.

9. Zusammensetzung nach Anspruch 1, wobei die niedermolekularen gehinderten Amine aus der Gruppe bestehend aus
2) Bis(2,2,6,6-tetramethylpiperidin-4-yl)-sebacat,
6) Bis(1-octyloxy-2,2,6,6-tetramethylpiperidin-4-yl)sebacat,
14) 1-(2-Hydroxy-2-methylpropoxy)-4-octadecanoyloxy-2,2,6,6-tetramethylpiperidin und
15) Bis(1-(2-hydroxy-2-methylpropoxy)-2,2,6,6-tetramethylpiperidin-4-yl)sebacat
ausgewählt sind und die hochmolekularen gehinderten Amine aus der Gruppe bestehend aus
34) dem Reaktionsprodukt aus 2,4-Bis[(1-cyclohexyloxy-2,2,6,6-piperidin-4-yl)butylamino]-6-chlor-s-triazin und N,N'-Bis(3-aminopropyl)ethylendiamin),
35) dem Kondensat aus 1-(2-Hydroxyethyl)-2,2,6,6-tetramethyl-4-hydroxypiperidin und Bernsteinsäure,
36) linearen oder cyclischen Kondensaten aus N,N'-Bis(2,2,6,6-tetramethyl-4-piperidyl)-hexamethylendiamin und 4-tert.-Octylamino-2,6-dichlor-1,3,5-s-triazin,
38) linearen oder cyclischen Kondensaten aus N,N'-Bis(2,2,6,6-tetramethyl-4-piperidyl)-hexamethylendiamin und 4-Morpholino-2,6-dichlor-1,3,5-s-triazin,
39) linearen oder cyclischen Kondensaten aus N,N'-Bis(1,2,2,6,6-pentamethyl-4-piperidyl)-hexamethylendiamin und 4-Morpholino-2,6-dichlor-1,3,5-s-triazin,
40) dem Kondensat aus 2-Chlor-4,6-bis(4-n-butylamino-2,2,6,6-tetramethylpiperidyl)-1,3,5-triazin und 1,2-Bis(3-aminopropylamino)ethan und
45) der oligomeren Verbindung, bei der es sich um das Kondensationsprodukt von 4,4'-Hexamethylenbis(amino-2,2,6,6-tetramethylpiperidin) und 2,4-Dichlor-6-[(2,2,6,6-tetramethylpiperidin-4-yl)butylamino]-s-triazin, das mit 2-Chlor-4,6-bis(dibutylamino)-s-triazin endgruppenverschlossen ist, handelt, ausgewählt sind.

10. Zusammensetzung nach Andpruch 1, die ferner ein oder mehrere Additive aus der Gruppe bestehend aus Hydroxylaminstabilisatoren, organischen Phosphorstabilisatoren, Benzofuranstabilisatoren und Hydroxyphenylbenzotriazol-, Hydroxyphenyl-s-triazin- oder Benzophenon-Ultraviolettlichtabsorbern umfasst.

11. Verfahren zur kratzfesten und lichtstabilen Ausrüstung eines Polyolefinsubstrats, bei dem man in das Polyolefin eine wirksame Menge einer Additivkombination von
b) einem mit einem Carbonsäurereagenz funktionalisierten Olefinpolymer oder -copolymer,
c) einem primären oder sekundären Fettsäureamid und
d) einer Kombination von
i) einem niedermolekularen sterisch gehinderten Amin-Lichtschutzmittel und
ii) einem hochmolekularen sterisch
gehinderten Amin-Lichtschutzmittel einarbeitet.

12. Verwendung einer Additivkombination von
b) einem mit einem Carbonsäurereagenz funktionalisierten Olefinpolymer oder -copolymer,
c) einem primären oder sekundären Fettsäureamid und
d) einer Kombination von
i) einem niedermolekularen sterisch gehinderten Amin-Lichtschutzmittel und
ii) einem hochmolekularen sterisch gehinderten Amin-Lichtschutzmittel
zur Verbesserung der Kratzfestigkeit und Lichtstabilität eines Polyolefinsubstrats.

13. Eine Polyolefin-Zusammensetzung gemäß Anspruch 1, bei der
i) Bis(2,2,6,6-tetramethylpiperidin-4-yl)sebacat ist und
ii) ein lineares oder cyclisches Kondensat aus N,N'-Bis(2,2,6,6-tetramethyl-4-piperidyl)hexamethylendiamin und 4-tert-Octylamino-2,6-dichloro-1,3,5-triazin ist.

## Revendications

1. Composition de polyoléfine comprenant
a) un substrat polyoléfinique et
une quantité d'une combinaison d'adjuvants suffisante pour améliorer la résistance à la rayure et la stabilité à la lumière dudit substrat polyoléfinique, ladite combinaison d'adjuvants étant constituée des éléments suivants :
b) un polymère ou copolymère oléfinique portant une fonction réactive de type acide carboxylique,
c) un amide d'acide gras primaire ou secondaire et
d) une combinaison
i) d'un agent photostabilisant de type amine encombrée de faible masse molaire et
ii) d'un agent photostabilisant de type amine encombrée de masse molaire importante.

2. Composition conforme à la revendication 1, où le composant (a) est le polypropylène, le polyéthylène ou une polyoléfine thermoplastique.

3. Composition conforme à la revendication 1, où le composant (b) est un polymère ou copolymère oléfinique auquel est greffé un réactif de type acide carboxylique alpha, bêta-insaturé.

4. Composition conforme à la revendication 1, où le composant (b) est un polymère ou copolymère oléfinique auquel est greffé un réactif de type acide carboxylique alpha, bêta-insaturé choisi dans le groupe constitué par l'acide acrylique, l'acide méthacrylique, l'acrylate de méthyle, le méthacrylate de méthyle, le méthacrylate de 2-hydroxypropyle, l'acrylate de butyle et l'anhydride maléique.

5. Composition conforme à la revendication 1, où le composant (b) est un polymère ou copolymère oléfinique auquel est greffé l'anhydride maléique.

6. Composition conforme à la revendication 1, où le composant (c) est le N-stéarylérucamide ou le N-oléylpalmitamide.

7. Composition conforme à la revendication 1, où les amines encombrées de faible masse molaire présentent une masse molaire comprise entre 200 et 1000 g/mol et où les amines encombrées de masse molaire importante présentent une masse molaire comprise entre 1200 et 10 000 g/mol.

8. Composition conforme à la revendication 1, où les amines encombrées de faible masse molaire sont choisies dans le groupe constitué par les suivantes :
1) 1-cyclohexyloxy-2,2,6,6-tétraméthyl-4-octadécylaminopipéridine,
2) sébacate de bis(2,2,6,6-tétraméthylpipéridin-4-yle),
3) sébacate de bis(1-acétoxy-2,2,6,6-tétraméthylpipéridin-4-yle),
4) sébacate de bis(1,2,2,6,6-pentaméthyl-4-yle),
5) sébacate de bis(1-cyolohexyloxy-2,2,6,6-tétraméthylpipéridin-4-yle),
6) sébacate de bis(1-octyloxy-2,2,6,6-tétraméthylpipéridin-4-yle),
7) sébacate de bis(1-acyl-2,2,6,6-tétraméthylpiperidin-4-yle),
8) n-butyl-3,5-di-tert-butyl-4-hydroxybenzylmalonate de bis(1,2,2,6,6-pentaméthyl-4-pipéridyle),
9) 2,4-bis[(1-cyclohexyloxy-2,2,6,6-tétraméthylpipéridin-4-yl)butylamino]-6-(2-hydroxyéthylamino)-s-triazine,
10) adipate de bis(1-cyclohexyloxy-2,2,6,6-tétraméthylpipéridin-4-yle),
11) 2,4-bis[(1-cyclohexyloxy-2,2,6,6-pipéridin-4-yl)butylamino]-6-chloro-s-triazine,
12) 1-(2-hydroxy-2-méthylpropoxy)-4-hydroxy-2,2,6,6-tétraméthylpipéridine,
13) 1-(2-hydroxy-2-méthylpropoxy)-4-oxo-2,2,6,6-tétraméthylpipéridine,
14) 1-(2-hydroxy-2-méthylpropoxy)-4-octadécanoyloxy-2,2,6,6-tétraméthylpipéridine,
15) sébacate de bis(1-(2-hydroxy-2-méthylpropoxy)-2,2,6,6-tétraméthylpipéridin-4-yle),
16) adipate de bis(1-(2-hydroxy-2-méthylpropoxy)-2,2,6,6-tétraméthylpipéridin-4-yle),
17) 2,4-bis{N-[1-(2-hydroxy-2-méthylpropoxy)-2,2,6,6-tétraméthylpipéridin-4-yl]-N-butylamino}-6-(2-hydroxyéthylamino)-s-triazine,
18) 4-benzoyl-2,2,6,6-tétraméthylpipéridine,
19) p-méthoxybenzylidènemalonate de di-(1,2,2,6,6-pentaméthylpipéridin-4-yle),
20) 4-stéaryloxy-2,2,6,6-tétraméthylpipéridine,
21) succinate de bis(1-octyloxy-2,2,6,6-tétraméthylpipéridyle),
22) 1,2,2,6,6-pentaméthyl-4-aminopipéridine,
23) 2-undécyl-7,7,9,9-tétraméthyl-1-oxa-3,8-diaza-4-oxo-spiro[4,5]décane,
24) nitrilotriacétate de tris(2,2,6,6-tétraméthyl-4-pipéridyle),
25) nitrilotriacétate de tris(2-hydroxy-3-(amino-(2,2,6,6-tétraméthylpipéridin-4-yl)propyle),
26) tétrakis(2,2,6,6-tétraméthyl-4-pipéridyl)-1,2,3,4-butane-tétracarboxylate,
27) tétrakis(1,2,2,6,6-pentaméthyl-4-pipéridyl)-1,2,3,4-butane-tétracarboxylate,
28) 1,1'-(1,2-éthanediyl)-bis(3,3,5,5-tétraméthylpipérazinone),
29) 3-n-octyl-7,7,9,9-tétraméthyl-1,3,8-triazaspiro[4.5]décan-2,4-dione,
30) 8-acétyl-3-dodécyl-7,7,9,9-tétraméthyl-1,3,8-triazaspiro[4.5]décane-2,4-dione,
31) 3-dodécyl-1-(2,2,6,6-tétraméthyl-4-pipéridyl)pyrrolidin-2,5-dione,
32) 3-dodécyl-1-(1,2,2,6,6-pentaméthyl-4-pipéridyl)pyrrolidine-2,5-dione et
33) N,N'-bis-formyl-N,N'-bis(2,2,6,6-tétraméthyl-4-pipéridyl)hexaméthylènediamine,
et où les amines encombrées de masse molaire importante sont choisies dans le groupe constitué par les suivantes :
34) le produit de réaction de la 2,4-bis[(1-cyclohexyloxy-2,2,6,6-pipéridin-4-yl)butylamino]-6-chloro-s-triazine avec la N,N'-bis(3-aminopropyl)éthylènediamine),
35) le condensat de la 1-(2-hydroxyéthyl)-2,2,6,6-tétraméthyl-4-hydroxypipéridine avec l'acide succinique,
36) les condensats linéaires ou cycliques de la N,N'-bis(2,2,6,6-tétraméthyl-4-pipèridyl)-hexaméthylènediamine avec la 4-tert-octylamino-2,6-dichloro-1,3,5-triazine,
37) les condensats linéaires ou cycliques de la N,N'-bis(2,2,6,6-tétraméthyl-4-pipéridyl)-hexaméthylènediamine avec la 4-cyclohexylamino-2,6-dichloro-1,3,5-triazine,
38) les condensats linéaires ou cycliques de la N,N'-bis(2,2,6,6-tétraméthyl-4-pipéridyl)-hexaméthylènediamine avec la 4-morpholino-2,6-dichloro-1,3,5-triazine,
39) les condensats linéaires ou cycliques de la N,N'-bis(1,2,2,6,6-pentaméthyl-4-pipéridyl)-hexaméthylènediamine avec la 4-morpholino-2,6-dichloro-1,3,5-triazine,
40) le condensat de la 2-chloro-4,6-bis(4-n-butylamino-2,2,6,6-tétraméthylpipéridyl)-1,3,5-triazine avec le 1,2-bis(3-aminopropylamino)éthane,
41) le condensat de la 2-chloro-4,6-di-(4-n-butylamino-1,2,2,6,6-pentaméthylpipéridyl)-1,3,5-triazine avec le 1,2-bis(3-aminopropylamino)éthane,
42) un produit de réaction du 7,7,9,9-tétraméthyl-2-cycloundécyl-1-oxa-3,8-diaza-4-oxo-spiro[4,5]décane avec l'épichlorhydrine,
43) le poly[méthyl, (3-oxy-(2,2,6,6-tétraméthylpipéridin-4-yl)propyl)]siloxane, n° CAS 182635-99-0,
44) le produit de réaction du copolymère anhydride d'acide malique/α-oléfine en C₁₈-C₂₂ avec la 2,2,6,6-tétraméthyl-4-aminopipéridine,
45) le composé oligomère qui est le produit de condensation de la 4,4'-hexaméthylène-bis(amino-2,2,6,6-tétraméthylpipéridine) avec la 2,4-dichloro-6-[(2,2,6,6-tétraméthylpipéridin-4-yl)butylamino]-s-triazine et un coiffage 2-chloro-4,6-bis(dibutylamino)-s-triazine,
46) le composé oligomère qui est le produit de condensation de la 4,4'-hexaméthylène-bis(amino-1,2,2,6,6-pentaméthylpipéridine) avec la 2,4-dichloro-6-[(1,2,2,6,6-pentaméthylpipéridin-4-yl)butylamino]-s-triazine et un coiffage 2-chloro-4,6-bis(dibutylamino)-s-triazine,
47) le composé oligomère qui est le produit de condensation de la 4,4'-hexaméthylène-bis(amino-1-propoxy-2,2,6,6-tétraméthylpipéridine) avec la 2,4-dichloro-6-[(1-propoxy-2,2,6,6-tétraméthylpipéridin-4-yl)butylamino]-s-triazine avec un coiffage 2-chloro-4,6-bis(dibutylamino)-s-triazine,
48) le composé oligomère qui est le produit de condensation de la 4,4'-hexaméthylène-bis(amino-1-acyloxy-2,2,6,6-tétraméthylpipéridine) avec la 2,4-dichloro-6-[(1-acyloxy-2,2,6,6-tétraméthylpipéridin-4-yl)butylamino]-s-triazine et un coiffage 2-chloro-4,6-bis(dibutylamino)-s-triazine et
49) le produit obtenu par réaction d'un produit de la réaction entre le 1,2-bis(3-amino-propylamino)éthane et le chlorure cyanurique avec la (2,2,6,6-tétraméthylpipéridin-4-yl)butylamine.

9. Composition conforme à la revendication 1, où les amines encombrées de faible masse molaire sont choisies dans le groupe constitué par les suivantes :
2) sébacate de bis(2,2,6,6-tétraméthylpipéridin-4-yle),
6) sébacate de bis(1-octyloxy-2,2,6,6-tétraméthylpipéridyle),
14) 1-(2-hydroxy-2-méthylpropoxy)-4-octadécanoyloxy-2,2,6,6-tétraméthylpipéridine, et
15) sébacate de bis(1-(2-hydroxy-2-méthylpropoxy)-2,2,6,6-tétraméthylpipéridin-4-yle),
et où les amines encombrées de masse molaire importante sont choisies dans le groupe constitué par les suivantes :
34) le produit de réaction de la 2,4-bis[(1-cyclohexyloxy-2,2,6,6-pipéridin-4-yl)butylamino]-6-chloro-s-triazine avec la N,N'-bis(3-aminopropyl)éthylènediamine),
35) le condensat de la 1-(2-hydroxyéthyl)-2,2,6,6-tétraméthyl-4-hydroxypipéridine avec l'acide succinique,
36) les condensats linéaires ou cycliques de la N,N'-bis(2,2,6,6-tétraméthyl-4-pipéridyl)-hexaméthylènediamine avec la 4-tert-octylamino-2,6-dichloro-1,3,5-triazine,
38) les condensats linéaires ou cycliques de la N,N'-bis(2,2,6,5-tétraméthyl-4-pipéridyl)-hexaméthylènediamine avec la 4-morpholino-2,6-dichloro-1,3,5-triazine,
39) les condensats linéaires ou cycliques de la N,N'-bis(1,2,2,6,6-pentaméthyl-4-pipéridyl)-hexaméthylènediamine avec la 4-morpholino-2,6-dichloro-1,3,5-triazine,
40) le condensat de la 2-chloro-4,6-bis(4-n-butylamino-2,2,6,6-tétraméthylpipéridyl)-1,3,5-triazine avec le 1,2-bis(3-aminopropylamino)éthane, et
45) le composé oligomère qui est le produit de condensation de la 4,4'-hexaméthylène-bis(amino-2,2,6,6-tétraméthylpipéridine) avec la 2,4-dichloro-6-[(2,2,6,6-tétraméthylpipéridin-4-yl)butylamino]-s-triazine et un coiffage 2-chloro-4,6-bis(dibutylamino)-s-triazine.

10. Composition conforme à la revendication 1, comprenant en outre un ou plusieurs adjuvants choisis dans le groupe constitué par les agents stabilisants de type hydroxylamine, les agents stabilisant de type phosphore organique, les agents stabilisants de type benzofurannone et les agents absorbant les rayonnements ultraviolets de type hydroxyphénylbenzotriazole, hydroxyphényl-s-triazine ou benzophénone.

11. Procédé permettant de conférer à un substrat polyoléfinique une résistance à la rayure et une stabilité à la lumière, ledit procédé comprenant l'incorporation dans ladite polyoléfine d'une quantité active d'une combinaison d'adjuvants constituée des éléments suivants :
b) un polymère ou copolymère oléfinique portant une fonction réactive de type acide carboxylique,
c) un amide d'acide gras primaire ou secondaire et
d) une combinaison
i) d'un agent photostabilisant de type amine encombrée de faible masse molaire et
ii) d'un agent photostabilisant de type amine encombrée de masse molaire importante.

12. Utilisation d'une combinaison d'adjuvants constituée des éléments suivants :
b) un polymère ou copolymère oléfinique portant une fonction réactive de type acide carboxylique,
c) un amide d'acide gras primaire ou secondaire et
d) une combinaison
i) d'un agent photostabilisant de type amine encombrée de faible masse molaire et
ii) d'un agent photostabilisant de type amine encombrée de masse molaire importante,
dans l'amélioration de la résistance à la rayure et de la stabilité à la lumière d'un substrat polyoléfinique.

13. Composition de polyoléfine conforme à la revendication 1, où
i) est le sébacate de bis(2,2,6,6-tétraméthylpipéridin-4-yle), et
ii) est un condensat linéaire ou cyclique de la N,N'-bis(2,2,6,6-tétraméthyl-4-pipéridyl)-hexaméthylènediamine avec la 4-tert-octylamino-2,6-dichloro-1,3,5-triazine.
